# EUROPEAN PATENT APPLICATION

(11) **EP 4 580 228 A1**
(43) Date of publication of application: **02.07.2025**
(21) Application number: 23870286.4
(22) Date of filing: 11.09.2023
(51) Int. Cl.: H04W 8/18

(54) **COMMUNICATION METHOD AND APPARATUS**

(30) Priority: 30.09.2022 CN 202211230880; 09.12.2022 CN 202211585353
(71) Applicant: Huawei Technologies Co., Ltd., Shenzhen, Guangdong 518129 (CN)
(72) Inventor: LIAO, Ting, Shenzhen, Guangdong 518129 (CN); ZONG, Zaifeng, Shenzhen, Guangdong 518129 (CN); ZHOU, Xiaoyun, Shenzhen, Guangdong 518129 (CN); ZHENG, Xiaochun, Shenzhen, Guangdong 518129 (CN)
(74) Representative: Körber, Martin Hans
(86) International application number: PCT/CN2023/118063
(87) International publication number: WO 2024/067047

(57) **Abstract**

This application relates to the field of communication technologies, and provides a communication method and apparatus, so that an operator manages a terminal device. A core network device receives first information from a requester, where the first information indicates a first terminal; the core network device obtains an operator identification code allocated by an operator device to the first terminal; and the core network device sends second information to the first terminal, where the second information indicates the first terminal to store the operator identification code. After the operator identification code is stored in the terminal, an operator may manage the terminal based on the operator identification code.

## Description

### CROSS-REFERENCE TO RELATED APPLICATIONS

This application claims priority to Chinese Patent Application No. 202211230880.2, filed with the China National Intellectual Property Administration on September 30, 2022 and entitled "COMMUNICATION METHOD AND APPARATUS", which is incorporated herein by reference in its entirety. This application claims priority to Chinese Patent Application No. 202211585353.3, filed with the China National Intellectual Property Administration on December 9, 2022 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

With development of technologies, a passive internet of things has a prospect of larger-scale application and deployment. However, a passive internet of things terminal (for example, a tag) has a simple function, and needs to rely on external excitation to send information to the outside. The excitation is generally from a card reader/writer. With reference to resources of a wireless communication system, a function of a reader/writer may be integrated into an access network device, and a tag is excited by using a radio air interface technology.

Currently, after an enterprise purchases tags from a tag manufacturer, the enterprise (for example, an application function) may manage the purchased tags together. In a possible implementation scenario, an enterprise may authorize an operator to manage tags purchased by the enterprise together. However, currently, there is no solution in which an operator manages tags.

### SUMMARY

Embodiments of this application provide a communication method and apparatus, so that an operator manages a terminal device.

According to a first aspect, a communication method is provided. The method may be performed by a core network device, or may be a component used in the core network device, for example, a chip or a processor. The following uses an example in which the method is performed by the core network device for description. First, the core network device receives first information from a requester, where the first information indicates a first terminal. Then, the core network device obtains an operator identification code allocated by an operator device to the first terminal. Next, the core network device sends second information to the first terminal, where the second information indicates the first terminal to store the operator identification code.

After the operator identification code is stored in the terminal, an operator may manage the terminal based on the operator identification code.

In a possible implementation, the operator identification code includes a public land mobile network (public land mobile network, PLMN) identifier.

In a possible implementation, the operator identification code further includes one or more of the following: a first electronic product code (electronic product code, EPC), an enterprise code allocated to the first terminal, and a unique identification code that is of the first terminal in the operator device and that is mapped from the first electronic product code EPC, where the first EPC is allocated by the operator device, or the first EPC is from the requester. The operator identification code includes the information, so that the operator identification code can replace a function of an EPC.

In a possible implementation, the second information further includes first location information for storing the operator identification code. A storage location of the operator identification code may be flexibly indicated by using the second information.

In a possible implementation, the second information further indicates the first terminal to store the first electronic product code EPC corresponding to the first terminal, where the first EPC is allocated by the operator device to the first terminal, or the first EPC is from the requester.

In a possible implementation, the second information further includes second location information for storing the first EPC. A storage location of the EPC may be flexibly indicated by using the second information.

In a possible implementation, after receiving the first information from the requester, the core network device may further obtain a key corresponding to the first terminal, where the second information further indicates the first terminal to store the corresponding first key.

In a possible implementation, if the first information includes the key allocated to the first terminal, the core network device may obtain, based on the first information, the key corresponding to the first terminal.

In a possible implementation, the core network device allocates the key to the first terminal.

In a possible implementation, the core network device obtains the key corresponding to the first terminal from the operator device.

In a possible implementation, the core network device includes a first core network device and a second core network device. The first core network device obtains the key corresponding to the first terminal, and sends the key to the second core network device. The second core network device is configured to communicate with an access network device and a terminal. For example, the second core network device sends the second information to the first terminal. For example, the first core network device is a UDM, and the second core network device is a TMF. The UDM checks whether the key corresponding to the first terminal is locally stored. If the key corresponding to the first terminal is locally stored, the UDM may directly send the key corresponding to the first terminal to the TMF. If the key is not locally stored, the UDM requests, from an NRF, information (such as address information) about a key storage network element. The UDM receives the information that is about the key storage network element and that is sent by the NRF. The network element is, for example, a UDR or an AUSF. The UDM requests, based on the information about the network element, the key corresponding to the first terminal from the key storage network element. After obtaining the key corresponding to the first terminal, the UDM sends the key corresponding to the first terminal to the TMF. Further, optionally, before the UDM obtains the key corresponding to the first terminal, the TMF sends, to the UDM, indication information for obtaining the key of the first terminal. After receiving the indication information for obtaining the key of the first terminal, the UDM sends, to the TMF, obtained information about the key corresponding to the first terminal. If there is no corresponding key information on the UDM, the UDM obtains, based on the indication information, the key corresponding to the first terminal, and sends the key corresponding to the first terminal to the TMF.

In a possible implementation, the core network device includes a first core network device and a second core network device. The second core network device obtains the key corresponding to the first terminal. The second core network device is configured to communicate with an access network device and a terminal. For example, the second core network device sends the second information to the first terminal. For example, the first core network device is a UDM, and the second core network device is a TMF. The UDM learns, through an NRF, of information about a key storage network element, and sends the information about the key storage network element to the TMF. Then, the TMF obtains, based on the information about the key storage network element, a key corresponding to one or more terminals (including the first terminal) from the key storage network element. Further, optionally, before the UDM learns, through the NRF, of the information about the key storage network element, the TMF sends, to the UDM, indication information for obtaining the key of the first terminal or obtains the information about the key storage network element. After the UDM receives the indication information for obtaining the key of the first terminal or obtains the information about the key storage network element, the UDM learns, through the NRF, of the information about the key storage network element, and sends the information about the key storage network element to the TMF.

In a possible implementation, the core network device is a TMF, and the TMF learns, through an NRF, of information about a key storage network element. The network element is, for example, a UDM, a UDR, or an AUSF. Next, the TMF obtains, based on the information about the key storage network element, a key corresponding to one or more terminals (including the first terminal) from the key storage network element.

In a possible implementation, the second information further includes third location information for storing the first key.

In a possible implementation, the first information includes one or more of the following: a tag identifier (tag identifier, TID) type of the first terminal, a default electronic product code EPC of the first terminal, and information about the requester, where the requester manages the first terminal. The first terminal may be matched by using the information, and certainly, another terminal may be matched.

In a possible implementation, before sending the second information to the first terminal, the core network device may further send third information to the access network device, where the third information indicates to search for the first terminal; and then the core network device receives the default electronic product code EPC from the first terminal.

In a possible implementation, the third information includes one or both of the following: the tag identifier TID type of the first terminal, and the default electronic product code EPC of the first terminal. The first terminal may be matched by using the information, and certainly, another terminal may be matched.

According to a second aspect, a communication method is provided. The method may be performed by a core network device, or may be a component used in the core network device, for example, a chip or a processor. The following uses an example in which the method is performed by the core network device for description. First, the core network device receives fourth information from a requester, where the fourth information indicates a first terminal; then sends fifth information to an access network device, where the fifth information indicates to search for the first terminal; and then receives a first EPC allocated to the first terminal; and requests, based on the first EPC, to obtain an operator identification code allocated to the first terminal. Then the core network device receives the operator identification code allocated to the first terminal, and the core network device triggers authentication between the first terminal and an operator device based on the operator identification code.

A capability of the first terminal is reporting the EPC by default. After accessing an access network device (for example, random access succeeds), the first terminal may actively send the first EPC allocated to the first terminal. After obtaining the first EPC of the first terminal, the core network device may request, based on the first EPC of the first terminal, the operator identification code allocated to the first terminal. Further, the authentication is performed on the terminal based on the operator identification code, so that an operator manages the terminal.

According to a third aspect, a communication method is provided. The method may be performed by a core network device, or may be a component used in the core network device, for example, a chip or a processor. The following uses an example in which the method is performed by the core network device for description. First, the core network device receives fourth information from a requester, where the fourth information indicates a first terminal; then, the core network device sends fifth information to an access network device, where the fifth information indicates to search for the first terminal and request to obtain an operator identification code allocated to the first terminal; then, the core network device receives the operator identification code allocated to the first terminal; and further, the core network device triggers the first terminal to perform authentication with an operator device based on the operator identification code.

A capability of the first terminal is reporting the EPC by default. After accessing the access network device (for example, random access succeeds), the first terminal may actively send the first EPC allocated to the first terminal. In a process of searching for the first terminal, the access network device indicates the first terminal to send the operator identification code allocated to the first terminal. In this way, after accessing the access network device (for example, the random access succeeds), the first terminal may send the operator identification code allocated to the first terminal. Further, the authentication is performed on the terminal based on the operator identification code, so that an operator manages the terminal.

According to a fourth aspect, a communication method is provided. The method may be performed by a core network device, or may be a component used in the core network device, for example, a chip or a processor. The following uses an example in which the method is performed by the core network device for description. First, the core network device receives fourth information from a requester, where the fourth information indicates the first terminal; and then the core network device sends fifth information to an access network device, where the fifth information indicates to search for the first terminal. Next, the core network device receives an operator identification code allocated to the first terminal. Then, the core network device triggers the first terminal to perform authentication with an operator device based on the operator identification code.

The capability of the first terminal is reporting the operator identification code by default. After accessing the access network device (for example, random access succeeds), the first terminal may actively send the operator identification code allocated to the first terminal. Further, the authentication is performed on the terminal based on the operator identification code, so that an operator manages the terminal.

The following possible implementations are applicable to the second aspect, the third aspect, and the fourth aspect.

In a possible implementation, the fourth information includes information about the requester, and the requester manages the first terminal; and before the core network device sends the fifth information to the access network device, the core network device determines, based on the information about the requester, a public land mobile network identifier PLMN ID allocated to the first terminal, where the fifth information includes the allocated PLMN ID. The PLMN ID is used to match the terminal to be searched for.

In a possible implementation, before sending the fifth information to the access network device, the core network device determines, based on the information about the requester, an enterprise identifier allocated to the first terminal, where the fifth information further includes the allocated enterprise identifier. The PLMN ID and the enterprise identifier are used to match the terminal to be searched for.

The enterprise identifier is an enterprise code allocated to the first terminal; or the enterprise identifier is a service identifier in a CompanyPrefix in an electronic product code EPC memory bank of the first terminal.

In a possible implementation, the fourth information includes one or more of the following: the first electronic product code EPC of the first terminal, a TID type of the first terminal, and the information about the requester, where the requester manages the first terminal. The fifth information includes one or more of the following: the first electronic product code EPC of the first terminal, the operator identification code associated with the first electronic product code EPC of the first terminal, and the TID type of the first terminal. The information is used to match the terminal to be searched for.

In a possible implementation, before triggering the authentication between the first terminal and the operator device based on the operator identification code, the core network device may further determine, based on the operator identification code and subscription information of the first terminal, that the operator needs to perform authentication on the operator identification code. It is first determined that the operator needs to perform the authentication on the operator identification code, and then the authentication is performed, so that signaling exchanging caused by invalid authentication can be avoided.

According to a fifth aspect, a communication method is provided. The method may be performed by a first terminal, or may be a component used in the first terminal, for example, a chip or a processor. The following uses an example in which the method is performed by the first terminal for description. First, the first terminal receives second information from a core network device, where the second information indicates the first terminal to store an operator identification code, and the operator identification code is allocated by an operator device to the first terminal. Then, the first terminal stores the operator identification code.

In a possible implementation, the second information further includes first location information for storing the operator identification code; and the first terminal stores the operator identification code at a first storage location corresponding to the first location information.

In a possible implementation, the second information further indicates the first terminal to store a first electronic product code EPC corresponding to the first terminal, where the first EPC is allocated by the operator device, or the first EPC is from a requester; and the first terminal may further store the first EPC.

In a possible implementation, the second information further includes second location information for storing the first EPC; and the first terminal stores the first EPC at a second storage location corresponding to the second location information.

In a possible implementation, the second information further indicates the first terminal to store a first key corresponding to the first terminal, and the first terminal may further store the first key.

In a possible implementation, the second information further includes third location information for storing the first key, and the first terminal stores the first key at a third storage location corresponding to the third location information.

In a possible implementation, before the first terminal receives the second information from the second core network device, the first terminal accesses an access network device; and sends a default electronic product code EPC of the first terminal to the second core network device through the access network device.

According to a sixth aspect, a communication apparatus is provided. The apparatus has a function of implementing any one of the foregoing aspects and the possible implementations of the foregoing aspects. The function may be implemented by using hardware, or may be implemented by hardware by executing corresponding software. The hardware or software includes one or more functional modules corresponding to the foregoing function.

According to a seventh aspect, a communication apparatus is provided. The apparatus includes a processor, and optionally, further includes a memory. The processor is coupled to the memory. The memory is configured to store a computer program or instructions. The processor is configured to execute a part or all of the computer program or instructions in the memory; and when executing the part or all of the computer program or instructions, the processor is configured to implement a function in the method according to any one of the foregoing aspects and the possible implementations of the foregoing aspects.

In a possible implementation, the apparatus may further include a transceiver. The transceiver is configured to: send a signal processed by the processor, or receive a signal input into the processor. The transceiver may perform a sending action or a receiving action in any one of the aspects and the possible implementations of the aspects.

According to an eighth aspect, this application provides a chip system. The chip system includes one or more processors (which may also be referred to as processing circuits). The processor is electrically coupled to a memory (which may also be referred to as a storage medium). The memory may be located in the chip system, or may not be located in the chip system. The memory is configured to store a computer program or instructions. The processor is configured to execute a part or all of the computer program or instructions in the memory; and when executing the part or all of the computer program or instructions, the processor is configured to implement a function in the method according to any one of the foregoing aspects and the possible implementations of the foregoing aspects.

In a possible implementation, the chip system may further include an input/output interface (which may also be referred to as a communication interface). The input/output interface is configured to: output a signal processed by the processor, or receive a signal input into the processor. The input/output interface may perform a sending action or a receiving action in any one of the aspects and the possible implementations of the aspects. Specifically, the output interface performs the sending action, and the input interface performs the receiving action.

In a possible implementation, the chip system may include a chip, or may include a chip and another discrete device.

According to a ninth aspect, a computer-readable storage medium is provided, and is configured to store a computer program. The computer program includes instructions for implementing a function in any one of the aspects and the possible implementations of the aspects.

Alternatively, a computer-readable storage medium is provided, and is configured to store a computer program. When the computer program is executed by a computer, the computer may be enabled to perform the method according to any one of the foregoing aspects and the possible implementations of the foregoing aspects.

According to a tenth aspect, a computer program product is provided. The computer program product includes computer program code. When the computer program code is run on a computer, the computer is enabled to perform the method according to any one of the foregoing aspects and the possible implementations of the foregoing aspects.

According to an eleventh aspect, a communication system is provided. The system includes a core network device that performs the method according to any one of the first aspect and the possible implementations of the first aspect, and a first terminal that performs the method according to any one of the first aspect and the possible implementations of the first aspect. Optionally, the communication system further includes a requester that communicates with the core network device.

According to a twelfth aspect, a communication system is provided. The system includes a core network device that performs the method according to any one of the second aspect and the possible implementations of the second aspect, and a first terminal that communicates with the core network device. Optionally, the communication system further includes a requester that communicates with the core network device.

According to a thirteenth aspect, a communication system is provided. The system includes a core network device that performs the method according to any one of the third aspect and the possible implementations of the third aspect, and a first terminal that communicates with the core network device. Optionally, the communication system further includes a requester that communicates with the core network device.

According to a fourteenth aspect, a communication system is provided. The system includes a core network device that performs the method according to any one of the fourth aspect and the possible implementations of the fourth aspect, and a first terminal that communicates with the core network device. Optionally, the communication system further includes a requester that communicates with the core network device.

For technical effects of the sixth aspect to the fourteenth aspect, refer to the descriptions of the first aspect to the fifth aspect. Repeated parts are not described again.

### BRIEF DESCRIPTION OF DRAWINGS

FIG. 1a is a diagram of a structure of a communication system according to an embodiment of this application;
FIG. 1b is a diagram of a structure of another communication system according to an embodiment of this application;
FIG. 2 is a diagram of a format of a memory bank of a tag in the conventional technology;
FIG. 3 is a flowchart of communication according to an embodiment of this application;
FIG. 4 is a flowchart of communication of storing an operator identification code in a first terminal according to an embodiment of this application;
FIG. 5 is a flowchart of communication in which an operator manages a terminal according to an embodiment of this application;
FIG. 6 is a flowchart of communication in which an operator manages a terminal according to an embodiment of this application;
FIG. 7 is a flowchart of communication in which an operator manages a terminal according to an embodiment of this application;
FIG. 8 is a schematic flowchart in which a network performs authentication on a terminal according to an embodiment of this application;
FIG. 9 is a schematic flowchart in which a terminal performs authentication on a network according to an embodiment of this application;
FIG. 10 is a flowchart of communication in a case of enterprise mismatch according to an embodiment of this application;
FIG. 11 is a flowchart of communication in a case of enterprise mismatch according to an embodiment of this application;
FIG. 12 is a diagram of a structure of a communication apparatus according to an embodiment of this application; and
FIG. 13 is a diagram of a structure of a communication apparatus according to an embodiment of this application.

### DESCRIPTION OF EMBODIMENTS

A communication method provided in this application may be applied to various communication systems, for example, an internet of things (internet of things, IoT), a passive internet of things (passive IoT, P-IoT; or ambient IoT, A-IoT), a semi-passive internet of things (semi-passive IoT), a semi-active internet of things (semi-active IoT), an active internet of things (active IoT), a narrowband internet of things (narrowband internet of things, NB-IoT), a long term evolution (long term evolution, LTE) system, a 5th generation (5th generation, 5G) communication system, a hybrid architecture of LTE and 5G, or a new communication system emerging in 6G or future communication development. Alternatively, the communication system may be a machine to machine (machine to machine, M2M) network, a machine type communication (machine type communication, MTC) network, or another network.

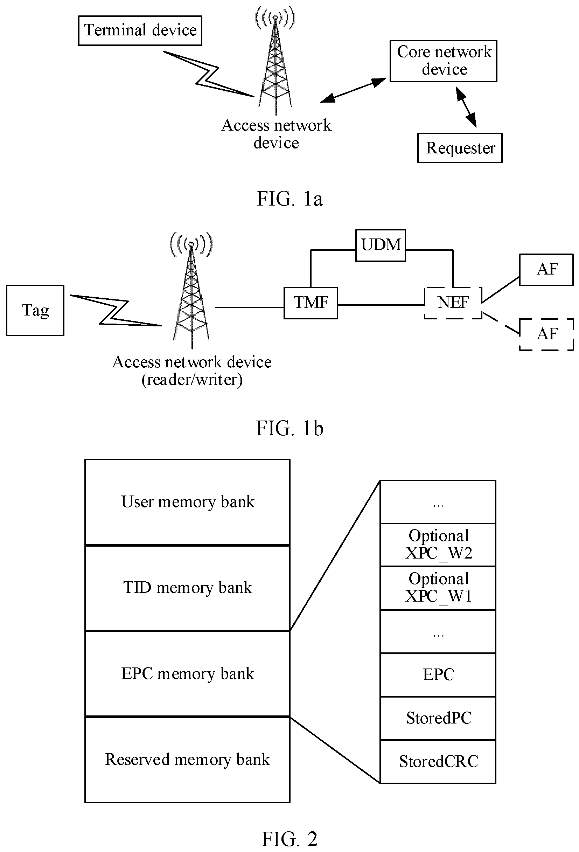

FIG. 1a is a diagram of a possible communication system applicable to an embodiment of this application. The communication system includes a terminal device, an access network device, a core network device, and a requester.

The requester may perform an operation on the terminal device (for example, a tag), and the operation includes but is not limited to obtaining information about the terminal device, an inventory operation (or referred to as a stocktaking operation), a read operation, a write operation, an invalidation operation, a kill operation, and the like. The requester sends an operation instruction through the core network device. In a possible implementation, the core network device indicates the access network device to initiate random access to the terminal device. After the terminal device successfully performs the random access, the access network device sends or forwards, to the terminal device, information about an operation that needs to be performed. In another possible implementation, the core network device indicates a second terminal device to initiate random access to a first terminal device. After the terminal device successfully performs the random access, the second terminal device sends or forwards, to the first terminal device, information about an operation that needs to be performed.

The terminal device obtains corresponding information or sends corresponding information based on the received information about the operation. For example, when the operation is an inventory operation, the terminal device sends identification information of the terminal device; when the operation is a read operation, the terminal device sends data information stored in a memory bank of the terminal device; or when the operation is a write operation, the terminal device stores, in a memory bank of the terminal device, data information that needs to be written.

The access network device sends, to the core network device, information from the terminal device, and the core network device sends the information to the requester.

The terminal device may be a terminal device in an internet of things technology, and includes but is not limited to a passive terminal device, a semi-passive terminal device, a semi-active terminal device, an active terminal device, a low-power consumption terminal device, a zero-power consumption terminal device, a passive (passive) terminal device, an active (active) terminal device, and the like.

The terminal device may be referred to as a user equipment (user equipment, UE), a terminal, an access terminal, a subscriber unit, a subscriber station, a mobile station, a remote station, a remote terminal, a mobile device, a user terminal, a wireless communication device, a user agent, or a user apparatus. The terminal device may be widely used in various scenarios, for example, an internet of things (internet of things, IoT), device-to-device (device-to-device, D2D) communication, vehicle to everything (vehicle to everything, V2X) communication, machine type communication (machine type communication, MTC), the internet of things (internet of things, IoT), virtual reality, augmented reality, industrial control, self-driving, telemedicine, a smart grid, smart furniture, a smart office, a smart wearable device, smart transportation, and a smart city. The terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile communication network (public land mobile network, PLMN) or a non-terrestrial network (non-terrestrial network, NTN), or the like. Alternatively, the terminal device may be an end device, a logical entity, a smart device, or the like, for example, a terminal device such as a mobile phone or a smart terminal, a communication device such as a server, a gateway, a base station, or a controller, or an internet of things (internet of things, IoT) device such as a tag (such as a passive tag, an active tag, or a semi-active tag), a sensor, an electricity meter, or a water meter. Alternatively, the terminal device may be an unmanned aerial vehicle (unmanned aerial vehicle or uncrewed aerial vehicle, UAV) having a communication function. When the terminal device is a passive terminal, a semi-passive terminal, a semi-active terminal, an active terminal, or a tag, the terminal device may receive or send data by obtaining energy. An energy obtaining manner includes but is not limited to radio, solar energy, light energy, wind energy, water energy, thermal energy, kinetic energy, and the like. An energy obtaining manner of a passive terminal, a semi-passive terminal, a semi-active terminal, an active terminal, or a tag is not limited in this application. In addition, the tag in this application may be in a tag form, or may be in any terminal form.

The access network device is configured to connect the terminal device to a wireless network. The access network device may be a base station (base station), a pole site, an indoor base station (for example, a Lampsite), a home base station (for example, a home NB), a micro base station, an integrated access and backhaul (integrated access and backhaul, IAB) node, a mobile base station, a radio access network, a radio access network device, an evolved NodeB (evolved NodeB, eNodeB) in an LTE system or an LTE-advanced (LTE-Advanced, LTE-A) system, a next generation NodeB (next generation NodeB, gNB) in a 5G communication system, a transmission reception point (transmission reception point, TRP), a baseband unit (baseband unit, BBU), a Wi-Fi access point (access point, AP), a base station in a future mobile communication system, an access node in a Wi-Fi system, or the like. Alternatively, the access network device may be a module or a unit that implements some functions of a base station, for example, may be a central unit (central unit, CU) or a distributed unit (distributed unit, DU). A specific technology and a specific device form that are used by the access network device are not limited in embodiments of this application. For example, in a network structure, the access network device may be a CU node, a DU node, or an access network device including a CU node and a DU node. Specifically, the CU node is configured to support protocols such as radio resource control (radio resource control, RRC), a packet data convergence protocol (packet data convergence protocol, PDCP), and a service data adaptation protocol (service data adaptation protocol, SDAP). The DU node is configured to support a radio link control (radio link control, RLC) layer protocol, a medium access control (medium access control, MAC) layer protocol, and a physical layer protocol. Alternatively, the access network device may be a device having a reader (reader) function.

The requester may be understood as a device that sends an operation instruction, for example, a third-party device, a server (server), a P-IoT server, an application server (application server, AS), an application function (application function, AF), a passive internet of things application function (P-IoT AF), an internet of things application function (IoT AF), or another device that sends an operation instruction. The requester may correspond to a specific type of user. The specific type of user may include an enterprise, a tenant, a third party, or a company, which is not limited. That the requester corresponds to a specific type of user may be understood as that the requester belongs to the specific type of user and is managed by the specific type of user.

The core network device may include one or more of the following network elements.

An access management network element (which may also be referred to as an access management network element, a mobility management network element, or an access and mobility management network element) is a control plane network element provided by an operator network, and is responsible for access control and mobility management for accessing the operator network by the terminal device, for example, including functions such as mobility status management, temporary user identity assignment, and user authentication. In a 5G communication system, the access management network element may be an access and mobility management function (access and mobility management function, AMF) network element. In a future communication system, the access management network element may still be an AMF network element, or may have another name. This is not limited in this application.

A session management network element is mainly responsible for session management in a mobile network, for example, session establishment, modification, and release. Specific functions are, for example, assigning an IP address to a user, and selecting a user plane network element that provides a packet forwarding function. In a 5G communication system, the session management network element may be a session management function (session management function, SMF) network element. In a future communication system, the session management network element may still be an SMF network element, or may have another name. This is not limited in this application.

A user plane network element is responsible for forwarding and reception of user data in the terminal device. The user plane network element may receive user data from a data network, and transmit the user data to the terminal device through the access network device. The user plane network element may also receive user data from the terminal device through the access network device, and forward the user data to the data network. A transmission resource and a scheduling function, in the user plane network element, that serves the terminal device are managed and controlled by the SMF network element. In a 5G communication system, the user plane network element may be a user plane function (user plane function, UPF) network element. In a future communication system, the user plane network element may still be a UPF network element, or may have another name. This is not limited in this application.

A data management network element is configured for generation of authentication credentials, user identification handling (for example, storage and management of permanent user identifiers), access control, subscription data management, and the like. In a 5G communication system, the data management network element may be a unified data management (unified data management, UDM) network element. In a future communication system, the unified data management may still be a UDM network element, or may have another name. This is not limited in this application.

A policy control network element mainly supports providing a unified policy framework to govern network behavior and providing a policy rule to a control layer network function, and is responsible for obtaining user subscription information related to a policy decision. In a 4G communication system, the policy control network element may be a policy and charging rules function (policy and charging rules function, PCRF) network element. In a 5G communication system, the policy control network element may be a policy control function (policy control function, PCF) network element. In a future communication system, the policy control network element may still be a PCF network element, or may have another name. This is not limited in this application.

A network repository network element may be configured to provide a network element discovery function and provide, based on a request from another network element, network element information corresponding to a network element type. The NRF further provides a network element management service, for example, network element registration, update, and deregistration, and network element status subscription and push. In a 5G communication system, the network repository network element may be a network repository function (network repository function, NRF) network element. In a future communication system, the network repository network element may still be an NRF network element, or may have another name. This is not limited in this application.

A network exposure network element is a control plane network element provided by an operator. The network exposure network element securely exposes an external interface of an operator network to a third party, and may be configured to securely expose services and capabilities that are provided by a 3rd generation partnership project (3rd generation partnership project, 3GPP) network function device, and the like. When the session management network element needs to communicate with a third-party network element, the network exposure network element may be used as a relay for communication between the session management network element and the third-party network element. When the network exposure network element serves as the relay, the network exposure network element may translate identification information of a subscriber and identification information of the third-party network element. For example, when the network exposure network element sends a subscription permanent identifier (subscription permanent identifier, SUPI) of a subscriber from an operator network to a third party, the SUPI may be translated into an external identity (identity, ID) corresponding to the SUPI. On the contrary, when sending the external ID (a network element ID of the third party) to the operator network, the network exposure network element may translate the external ID into the SUPI. In a 5G communication system, the network exposure function network element may be a network exposure function (network exposure function, NEF) network element. In a future communication system, the network exposure function network element may still be an NEF network element, or may have another name. This is not limited in this application.

A network slice selection network element may be configured to select an appropriate network slice for a service of a terminal. In a 5G communication system, the network slice selection network element may be a network slice selection function (network slice selection function, NSSF) network element. In a future communication system, the network exposure function network element may still be an NSSF network element, or may have another name. This is not limited in this application.

A network data analytics network element may collect data from each network function (network function, NF), for example, the policy control network element, the session management network element, the user plane network element, the access management network element, and an application function network element (through a network capability exposure function network element), and perform analysis and prediction. In a 5G communication system, the network data analytics network element may be a network data analytics function (network data analytics function, NWDAF). In a future communication system, the network exposure function network element may still be an NWDAF network element, or may have another name. This is not limited in this application.

A unified data repository network element is responsible for storing structured data information, including subscription information, policy information, and network data or service data defined in a standard format. In a 5G communication system, the unified data repository network element may be a unified data repository (unified data repository, UDR). In a future communication system, the network exposure function network element may still be an UDR network element, or may have another name. This is not limited in this application.

An authentication server function (authentication server function, AUSF) is a functional entity used by a network to perform authentication on a UE, is used by the network to verify whether the UE is authentic, and may support access service authentication defined in a 3GPP framework and authentication of a non-3GPP access network.

A network slice-specific and standalone non-public network authentication and authorization function (network slice-specific and SNPN authentication and authorization function, NSSAAF) is mainly configured to connect to an external authentication, authorization, and accounting (authentication, authorization, and accounting, AAA) server, convert between a service-based interface (service-based interface, SBI) and an AAA interface, and is an intermediate network element connecting an internal network element of a 3GPP network and an external AAA server. For example, a correspondence between address information of the AAA server and domain information is pre-configured in the NSAAF. After the NSSAAF receives the domain information, the NSAAF may determine the AAA server based on the address information of the AAA server, and then send a received message to the AAA server. For another example, the NSSAAF may request address information of the AAA server from a domain name server (domain name server, DNS) based on domain information, obtain the address information of the AAA server from the DNS server, and then send a received message to the AAA server. The NSSAAF may further be configured to: support for access to a standalone non-public network using credentials (credentials) from a credentials holder (credentials holder, CH) using an AAA server, or using credentials (credentials) from a default credentials server (default credentials server, DCS) using an AAA server. If the credentials holder or the default credentials server is from a third party, the NSSAAF may communicate with the AAA server via an AAA proxy (AAA proxy).

A tag management function (tag management function, TMF) network element may also be referred to as an internet of things management function (IoT management function, IMF) network element or an internet of things terminal management function (IoT device management function, IDMF) network element, and may implement one or more of the following functions: (1) identifying an instruction sent by the requester, and performing an operation on an internet of things terminal according to the instruction sent by the requester; (2) indicating the access network device or the terminal device to perform a random access procedure of the internet of things terminal; (3) obtaining data of the internet of things terminal, where the data sent by the internet of things terminal may be filtered or collected; (4) sending, to the requester, the data from the internet of things terminal; (5) connecting to one or more requesters and performing data routing; and (6) performing a security authentication procedure of the internet of things terminal, where the security procedure may be performed based on context information, policy information, or subscription data corresponding to the requester or the internet of things terminal. The TMF network element may be an independent network element and is independently deployed; or may be a part of functions of an existing network element and is co-deployed with the existing network element. For example, the TMF and the AMF or the UPF are co-deployed.

It may be understood that the foregoing network elements or functions may be network elements in a hardware device, software functions running on dedicated hardware, or virtualized functions instantiated on a platform (for example, a cloud platform). The network element may also be referred to as a "device", an "entity", or the like. One or more services may be obtained through division into the foregoing network elements or functions. Further, a service that exists independently of a network function may occur. In this application, an instance of the function, an instance of the service included in the function, or an instance of the service that exists independently of the network function may be referred to as a service instance.

It should be understood that FIG. 1a is merely an example of an applicable network architecture, and an actually applied network architecture may include more or fewer network elements than those in FIG. 1a. In embodiments of this application, names of the foregoing used network elements may change while functions of the network elements may remain the same in a future communication system.

FIG. 1b is a diagram of a structure of a communication system applicable to this application. A tag management function TMF has a direct connection interface to a UDM, an access network device, an NEF, or an AF for message exchanging. A dashed box and a dashed line represent an optional network element or an optional connection.

For ease of understanding embodiments of this application, the following describes some terms in embodiments of this application, to help a person skilled in the art have a better understanding.
(1) FIG. 2 is a diagram of a format of a memory bank of a tag in the conventional technology. The memory bank includes a reserved (reserved) memory bank, an electronic product code EPC memory bank, a tag identifier TID memory bank, and a user memory bank. The following describes each memory bank.

The reserved (reserved) memory bank is used to store a password or passwords required for functions of a kill (kill) command and/or an access (access) command.

The EPC memory bank identifies an EPC to which a tag is attached, including a StoredCRC, a StoredPC, an EPC, and an extended XPC. The EPC uniquely identifies an object. From a perspective of an upper-layer application, the EPC is in a uniform resource identifier (uniform resource identifier, URI) format is stored in the tag as a binary code. The URI format includes urn:epc:id:scheme:component1.component2.... Different EPC schemes are named by using schemes. Specific forms of component1, component2, and a remaining part of the EPC carried in the EPC scheme depend on a to-be-used EPC scheme. The EPC further includes control information, and the control information is used by a card reader to control a card reading procedure.

A plurality of EPC schemes are defined in an existing EPC tag data standard (TAG data standard, TDS), and URI formats of different schemes are different. For example:
When a scheme is SGTIN, a corresponding URI format is as follows:
urn: epc:id: sgtin: CompanyPrefix.ItemRefAndIndicator.SerialNumber.

When a scheme is SGLN, a corresponding URI format is as follows:
urn: epc:id: sgln: Company Prefix.LocationReference.Extension.

The TID memory bank stores a tag and vendor-specific data, such as a tag manufacturer identifier, a tag type identifier, and a tag capability.

The user memory bank is an optional extended area that allows storage of user-specific data.
(2) An inventory operation may also be referred to as a stocktaking operation. The operation may be performed to obtain identification information of a terminal, for example, obtain the identification information of the terminal by using a command such as a query (query) command or an acknowledgment (ack) command. The identification information of the terminal is, for example, an electronic product code EPC and a tag identifier TID.
(3) A read (Read) operation may be reading data in a memory bank of the terminal. For example, the data in the memory bank may include identification information (for example, an electronic product code EPC and a tag identifier TID), content stored in the reserved bank, or content stored in the user memory bank.
(4) A kill (Kill) operation can invalidate the terminal. For example, the invalidated terminal cannot work.
(5) A lock (Lock) operation can lock information about the terminal, to prevent a read operation or a write operation on the tag. Alternatively, the lock operation can lock a memory bank (memory bank), to prevent or allow a read operation or a write operation on the memory bank.
(6) A block write operation may enable a reader/writer to perform a multi-byte write operation on the memory bank (for example, the reserved bank, the EPC memory bank, the TID memory bank, or the user memory bank) of the terminal by using a single command.
(7) A block erase operation may enable the reader/writer to perform a multi-byte erase operation on the memory bank (for example, the reserved bank, the EPC memory bank, the TID memory bank, or the user memory bank) of the terminal.
(8) An access operation enables a terminal with a non-zero-value access password (access password) to change from an open (open) state to a secured (secured) state.
(9) A write (Write) operation may be performed on the memory bank of the terminal. For example, the identification information (for example, the EPC or the TID) in the memory bank may be written or rewritten. Alternatively, a write or rewrite operation may be performed on data in the reserved bank or the user memory bank.

In embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural.

In addition, unless otherwise stated on the contrary, ordinal terms such as "first" and "second" mentioned in embodiments of this application are used to distinguish between a plurality of objects, and are not intended to limit sizes, content, a sequence, a time sequence, priorities, importance degrees, or the like of the plurality of objects. For example, first information and second information are merely used to distinguish between different information, and do not indicate different content, priorities, importance, or the like of the two pieces of information.

Currently, a requester (which may be understood as an enterprise or a third party) may manage tags together. For example, the requester performs authentication on a tag by using an electronic product code EPC in the tag. In an implementable scenario, an operator manages tags together. Currently, there is no solution in which an operator manages tags. This application provides a solution in which an operator manages tags.

The following describes the technical solutions in embodiments of this application with reference to the accompanying drawings in embodiments of this application.

In the current technology, before delivery of a terminal (for example, a tag), a default EPC is already stored in an EPC memory bank. It may be understood that the default EPC is stored by a manufacturer for the terminal. Default EPCs of a plurality of terminals manufactured by a manufacturer are usually the same. After purchasing a terminal from a manufacturer, a requester (the requester may be understood as an enterprise or a third party) may perform a procedure of storing (the storing may be understood as printing or writing) an EPC (the EPC may be understood as an EPC for terminal management, but not a default EPC, and the EPC is usually allocated by the requester to the terminal) in an EPC memory bank of the terminal, to overwrite the default EPC stored in the EPC memory bank. Subsequently, the requester may manage terminals together by using EPCs allocated by the requester to the terminals. The requester allocates different EPCs to different terminals. The allocated EPC may uniquely identify a terminal.

In embodiments of this application, an operator may purchase a terminal from a manufacturer or an enterprise of a terminal, and the operator allocates an operator identification code to the terminal. An operator identification code may uniquely identify an operator, and an operator allocates different operator identification codes to different terminals. The operator identification code may uniquely identify a terminal. After the terminal stores (the storing may be understood as printing or writing) the operator identification code allocated by the operator, the operator may manage the terminal by using the operator identification code. For example, the management includes: performing network access identification by using the operator identification code, performing security authentication on the terminal, and the like.

It may be understood that an EPC stored in an EPC memory bank in the terminal purchased by the operator may be a default EPC stored by the manufacturer for the terminal (in other words, a requester has not performed a procedure of storing, in the terminal, an EPC allocated by the requester to the terminal), or may be an EPC allocated by a requester to the terminal (in other words, the requester has performed a procedure of storing, in the terminal, the EPC allocated by the requester to the terminal).

The operator identification code includes a public land mobile network identifier PLMN ID, and the PLMN ID may be a combination of a mobile country code (mobile country code, MCC) and a mobile network code (mobile network code, MNC). On this basis, optionally, the operator identification code further includes an enterprise-level identification code or an EPC-level identification code. For example, the operator identification code may further include one or more of the following: an EPC for terminal management (which may uniquely identify a terminal), an enterprise code allocated to the terminal (the enterprise code may be replaced with an application code or a service code), and a unique identification code that is of the terminal in an operator device and that is mapped from the EPC for terminal management. The EPC for terminal management is allocated by the operator device or allocated by the requester. The service code allocated by the operator device may be considered as an enterprise-level identification code. The EPC for terminal management may be considered as an EPC-level identifier. The unique identification code that is of the terminal in the operator device and that is mapped from the EPC for terminal management may be considered as an EPC-level identification code.

Generally, one enterprise has a plurality of departments, different departments manage different terminals, a same enterprise code may be allocated to terminals in a same department, and different enterprise codes may be allocated to terminals in different departments. In this way, differentiated inventory may be performed on terminals by using a department as a unit. Certainly, a same enterprise code may also be allocated to terminals managed by the enterprise, so that full inventory of the enterprise may be performed. An enterprise code may uniquely identify an enterprise or a department of an enterprise.

In another scenario, for example, different terminals may provide different services, for example, a gas service, a water fee service, a traffic service, an electric vehicle service, and an automobile service. A same identification code (for example, referred to as an application code or a service code) may be allocated to terminals that provide a same service, and different identification codes (for example, referred to as application codes or service codes) may be allocated to terminals that provide different services. In this way, differentiated inventory may be performed on terminals by using a service as a unit.

It may be understood that an enterprise code, an application code, and a service code may uniquely identify a type of terminal. A definition of the "type" may be flexible. For example, an enterprise is a type, a department or several departments of an enterprise is/are a type, a service is a type, and several services are a type. Names of the enterprise code, the application code, and the service code should not limit the scenario.

A difference between a default EPC and an EPC for terminal management includes: The default EPC is an EPC that is stored before a terminal is delivered, and is stored by a manufacturer for the terminal; the EPC for terminal management is allocated by an operator device or a requester to a terminal after the terminal is delivered; and the EPC for terminal management may uniquely identify the terminal. In the current technology, only a requester allocates an EPC for terminal management to a terminal. In this application, it is proposed that an operator device or a requester may allocate an EPC for terminal management to a terminal.

The operator identification code may be stored in any one of the following memory banks of the terminal: a reserved memory bank, an EPC memory bank, a TID memory bank, and a user memory bank.

In a specific manner, the operator identification code is stored in the EPC memory bank of the terminal. For a format of the operator identification code, refer to a subscription permanent identifier SUPI format or an SUPI-like format.

For example, a current international mobile subscriber identity (international mobile subscriber identity, IMSI)-based SUPI format, namely, a network access identifier (network access identifier, NAI), is as follows:
<IMSI>@ims.mnc<MNC>.mcc<MCC>.3gppnetwork.org.

Refer to the SUPI format, the format of the operator identification code may be <EPC>.3gppnetwork.org or <EPC>.mnc<MNC>.mcc<MCC>.3gppnetwork.org.

Specifically, the following several storage formats may be included:
Format 1: The EPC is extended, and a new EPC scheme is added. It is defined as follows: The new EPC scheme includes an MNC and an MCC, and optionally, further includes an enterprise-level identification code or an EPC-level identification code.

Based on the descriptions in FIG. 2, in the current technology, when a scheme is SGTIN, a corresponding URI format is as follows:
urn: epc:id: sgtin: CompanyPrefix.ItemRefAndIndicator.SerialNumber.

In an example, a format of a URI corresponding to the new EPC scheme added in embodiments of this application is as follows:
urn:epc:id:PLMN: PLMN ID. CompanyPrefix.ItemRefAndIndicator.SerialNumber.

Format 2: EPC schemes are different in different application scenarios. Each EPC scheme is extended. It is defined as follows: An extended EPC scheme includes an MNC and an MCC, and optionally, further includes an enterprise-level identification code or an EPC-level identification code. The extended EPC scheme is similar to the foregoing described URI format corresponding to the new EPC scheme added in embodiments of this application.

The operator identification code is stored in the EPC memory bank of the terminal, and the EPC cannot be fully occupied. EPC encoding space needs to be reserved for the enterprise for flexible allocation. Therefore, it may be considered that the operator identification code includes the enterprise-level identification code (for example, the enterprise code allocated to the terminal), and the enterprise-level identification code is used for password verification for network access of the enterprise.

In another specific manner, the operator identification code is written into a non-EPC memory bank. For example, the non-EPC memory bank is the reserved memory bank, the TID memory bank, the user memory bank, or another memory bank extended in the terminal.

A format of the operator identification code may be: an extended SUPI-like format based on a serialized TID (serialized TID, TID), where the extended SUPI-like format based on the STID is as follows:
<STID>.mnc<MNC>.mcc<MCC>.3gppnetwork.org. The STID may uniquely identify a tag.

The operator identification code is written into the non-EPC memory bank and does not occupy the EPC memory bank. An enterprise may customize EPC memory bank allocation for different application scenarios in the enterprise, for example, object type classification of different parts. The EPC memory bank may be used for verification on network access of the EPC for terminal management, and the like. When authentication is required, the operator may perform authentication based on the operator identification code, where the authentication may also be understood as STID-based authentication, and the enterprise may perform authentication based on the EPC in the EPC memory bank.

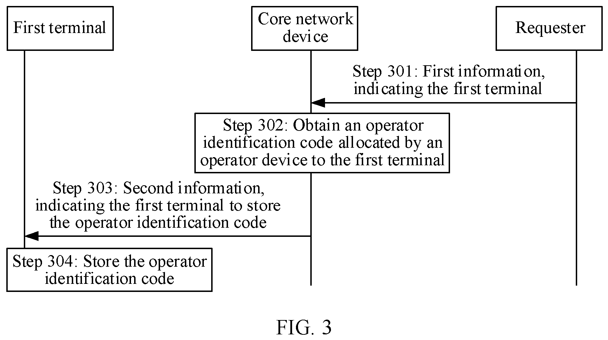

FIG. 3 is a flowchart of communication of storing an operator identification code in a first terminal. A requester may be the requester in FIG. 1a, for example, a third-party device, a server (server), a P-IoT server, an application server AS, an application function AF, a passive internet of things application function (P-IoT AF), or an internet of things application function (IoT AF). A core network device may be the core network device in FIG. 1a, for example, an AMF, a UDM, a TMF, an AUSF, an NSSAAF, an SMF, a UPF, a PCF, an NEF, or a UDR. The core network device may directly communicate with the requester, or may communicate with the requester through another core network device. The first terminal may be the terminal device in FIG. 1a. An operator device may be a device that has one or more of the following functions: allocating an operator identification code to a terminal, performing authentication on the terminal, allocating an EPC for terminal management to the terminal, allocating a key to the terminal, and the like. The operator device may be a device, for example, an AMF, a UDM, a TMF, an AUSF, an NSSAAF, a PCF, or a UDR, deployed in a core network. Alternatively, the operator device, for example, an AAA server, may not be deployed in a core network.

For ease of differentiation, the core network device that communicates with the requester is referred to as a first core network device, and a core network device that communicates with the terminal/an access network device is referred to as a second core network device. The first core network device and the second core network device may be a same core network device, or may be different core network devices. In FIG. 3, an example in which the first core network device and the second core network device are a whole is used for description. The first core network device and the second core network device are collectively referred to as a core network device. Alternatively, in FIG. 3, an example in which the first core network device and the second core network device are the same is used for description, and the first core network device and the second core network device are referred to as a core network device for short.

Step 301: The requester sends first information to the core network device, where the first information indicates the first terminal.

Correspondingly, the core network device receives the first information from the requester.

The first terminal is a terminal to which an operator identification code needs to be allocated (or printed, stored, or written). An operator identification code may uniquely identify an operator, or may uniquely identify a terminal.

It may be understood that, in addition to indicating the first terminal, the first information may further indicate another terminal. In a specific example, the first information indicates to allocate a corresponding operator identification code to one or more terminals (including the first terminal). In an example, a value of a bit at one or more specific locations in a plurality of bits occupied by the first information indicates that the operator identification code is allocated to the terminal or that no operator identification code is allocated to the terminal. For example, when a value of a bit at a specific location is 0, it indicates that the operator identification code is allocated to the terminal; or when a value of a bit at a specific location is 1, it indicates that no operator identification code is allocated to the terminal. A meaning expressed by the value of the bit is merely an example, and should not constitute a limitation on the solution.

The core network device may determine, based on the first information, the one or more terminals to which the operator identification code needs to be allocated, where the one or more terminals to which the operator identification code needs to be allocated include the first terminal. A default EPC may be stored in an EPC memory bank of the one or more terminals to which the operator identification code needs to be allocated and that is indicated by the first information, or the EPC memory bank may be empty, in other words, no default EPC is stored.

Processes of allocating operator identification codes to all the terminals are similar. In the example in FIG. 3, only an example in which the operator identification code is allocated to the first terminal is used for description.

The first information may indicate the first terminal in one or more of the following manners:
For example, the first information includes a default EPC range, and the default EPC range includes a default EPC of the first terminal. The first information may be understood as an EPC range for which operator identification code allocation is subscribed to or authorized and that is sent by the requester to the core network device. The core network device determines, based on the default EPC range, that an operator identification code needs to be allocated to a terminal whose default EPC belongs to the default EPC range.

For example, the first information includes one or more default EPCs, and the one or more default EPCs include the default EPC of the first terminal. The first information may be understood as one or more default EPCs for which operator identification code allocation is subscribed to or authorized and that are sent by the requester to the core network device. The core network device determines, based on the one or more default EPCs, that an operator identification code needs to be allocated to a terminal whose default EPC belongs to the one or more default EPCs.

For example, the first information includes one or more target TID types, and a TID of the first terminal belongs to the target TID type. The first information may be understood as one or more target TID types for which operator identification code allocation is subscribed to or authorized and that are sent by the requester to the core network device. The core network device determines, based on one or more target TID types, that an operator identification code needs to be allocated to a terminal whose TID type belongs to the one or more target TID types.

For example, the first information includes information about the requester, and the information about the requester may indicate a default EPC range or one or more default EPCs corresponding to (or managed by) the requester. The default EPC range or the one or more default EPCs corresponding to (or managed by) the requester include the default EPC of the first terminal. The core network device may determine, based on the information about the requester, that an operator identification code needs to be allocated to a terminal whose default EPC belongs to the default EPC range or the one or more default EPCs corresponding to (or managed by) the requester.

The information about the requester may include one or more of the following: an AF identifier (AF identifier or AF identity, AF ID), a service identifier (service identifier or service identity, service ID), an application identifier (application identifier or application identity, APP ID), address information of the AF, port information of the AF, address information of the application server AS, and port information of the application server AS. An address of the AF or the AS is, for example, an internet protocol address (internet protocol address, IP), a medium access control (medium access control, MAC) address, or an IPv6 prefix. A port of the AF or the AS is, for example, a transmission control protocol (transmission control protocol, TCP) port or a user datagram protocol (user datagram protocol, UDP) port.

The default EPC range or the one or more default EPCs corresponding to (or managed by) the requester may be stored or configured on the core network device, or may be stored or configured on another core network device. The core network device may send the information about the requester to another core network device, and the another core network device obtains, based on the information about the requester, the default EPC range or the one or more default EPCs corresponding to (or managed by) the requester, and sends the default EPC range or the one or more default EPCs to the core network device. For example, the another core network device may include a core network device such as a UDM, a UDR, an AUSF, an NEF, a PCF, an SMF, a TMF, or an NSSAAF.

In conclusion, it may be learned that the first information includes one or more of the following: a tag identifier TID type of the first terminal, the default electronic product code EPC of the first terminal, and the information about the requester. The core network device may determine the first terminal based on the information included in the first information, and certainly may further determine another terminal.

Optionally, on a basis of indicating the first terminal, the first information may further include a service range. For example, the service range includes target area information A, where the target area information A indicates an area corresponding to the one or more terminals to which the operator identification code needs to be allocated. For example, the target area information A may be a geographical location, a municipal location, or 3GPP location information (such as a tracking area (tracking area, TA) list or a cell list) corresponding to the one or more terminals to which the operator identification code needs to be allocated. The service range is used to query the access network device.

Optionally, the requester may further request the core network device to allocate (or print, store, or write) an EPC for terminal management to a terminal. For example, the first information indicates to allocate a corresponding EPC for terminal management to the one or more terminals (including the first terminal). In an example, a value of a bit at one or more specific locations in a plurality of bits occupied by the first information indicates that the EPC is allocated to the terminal or that no EPC is allocated to the terminal. For example, when a value of a bit at a specific location is 0, it indicates that the EPC is allocated to the terminal; or when a value of a bit at a specific location is 1, it indicates that no EPC is allocated to the terminal. A meaning expressed by the value of the bit is merely an example, and should not constitute a limitation on the solution.

When the EPC needs to be allocated to the terminal, in an example, the requester indicates, to the core network device, the EPC for terminal management of each of the one or more terminals (including the first terminal) indicated by the first information. For example, the first information may further include a range of an EPC for terminal management, or include a range of an EPC corresponding to each type, so that the core network device stores the EPC for terminal management in a corresponding terminal. An enterprise may define terminal types and EPC ranges for different purposes and send them to an operator for printing. In another example, the requester does not indicate, to the core network device, the EPC that is for terminal management and that corresponds to each of the one or more terminals (including the first terminal) indicated by the first information, but an operator allocates an EPC code to the one or more terminals indicated by the first information.

Optionally, the requester may further request the core network device to allocate (or print, store, or write) a key to the terminal. The key is used for security authentication between the terminal and the core network device or the requester. In an example, a value of a bit at one or more specific locations in a plurality of bits occupied by the first information indicates that the key is allocated to the terminal or that no key is allocated to the terminal. For example, when a value of a bit at a specific location is 0, it indicates that the key is allocated to the terminal; or when a value of a bit at a specific location is 1, it indicates that no key is allocated to the terminal. A meaning expressed by the value of the bit is merely an example, and should not constitute a limitation on the solution.

When the key needs to be allocated to the terminal, in an optional example, the requester indicates, to the core network device, a key corresponding to each of the one or more terminals (including the first terminal) indicated by the first information. For example, the first information further indicates the key corresponding to each of the one or more terminals. In a possible example, the one or more terminals indicated by the first information share one or more keys; the one or more terminals indicated by the first information respectively correspond to different keys; or terminals of a same type in the one or more terminals indicated by the first information share one or more keys, and terminals of different types correspond to different keys.

When the key needs to be allocated to the terminal, in another optional example, the requester does not indicate, to the core network device, a key corresponding to each of the one or more terminals (including the first terminal) indicated by the first information, and the core network device allocates the corresponding key to the one or more terminals (including the first terminal) indicated by the first information; or the core network device obtains, from the operator device, a key corresponding to each of the one or more terminals (including the first terminal) indicated by the first information.

In an example in which the requester does not indicate, to the core network device, the key corresponding to each of the one or more terminals (including the first terminal) indicated by the first information, the requester may indicate a key requirement to the core network device, and the core network device may allocate the key to the terminal based on the key requirement. In a possible implementation, the first information further indicates a key requirement. The key requirement indicates that the one or more terminals indicated by the first information share one or more keys, indicates that the one or more terminals indicated by the first information respectively correspond to different keys, or indicates that terminals of a same type in the one or more terminals indicated by the first information share one or more keys, and terminals of different types respectively correspond to different keys.

For example, the first information indicates the key requirement by using a package service identifier or a security level service identifier. For example, a package service identifier A or a security level service identifier A corresponds to a case in which the terminals correspond to different keys, a package service identifier B or a security level service identifier B corresponds to a case in which all the terminals share one or more keys, and a package service identifier C or a security level service identifier C corresponds to a case in which terminals of a same type share one or more keys, and terminals of different types respectively correspond to different keys.

In an example, a value of a bit at one or more specific locations in a plurality of bits occupied by the first information indicates the key requirement. For example, when values of bits at two specific locations are 00, it indicates that the terminals correspond to different keys, or indicates the package service identifier A or the security level service identifier A; when values of bits at two specific locations are 11, it indicates that all the terminals share one or more keys, or indicates the package service identifier B or the security level service identifier B; or when values of bits at two specific locations are 01, it indicates that terminals of a same type share one or more keys, and terminals of different types respectively correspond to different keys, or indicates the package service identifier C or the security level service identifiers C. A meaning expressed by the value of the bit is merely an example, and should not constitute a limitation on the solution.

In another example, the key requirement may alternatively be determined by the operator device or the core network device, and does not need to be determined by the requester. In addition, the operator may further determine a security policy of the terminal, for example, authentication is required or authentication is not required, an authentication manner is unidirectional authentication or bidirectional authentication, message encryption and/or integrity protection is supported, or message encryption and/or integrity protection is not supported.

Step 302: The core network device obtains the operator identification code allocated by the operator device to the first terminal.

When the first information indicates to allocate the operator identification code to the one or more terminals (including the first terminal), the core network device may determine, based on the first information, the one or more terminals (including the first terminal) to which the operator identification code needs to be allocated, to obtain the operator identification code allocated by the operator device to the one or more terminals. The operator device allocates different operator identification codes to different terminals, and an operator identification code may uniquely identify a terminal.

The operator device and the core network device may be a same device, or may be different devices. If the operator device and the core network device are the same device, a process in which the core network device obtains the operator identification code allocated by the operator device to the one or more terminals includes: The core network device allocates the operator identification code to the one or more terminals, or the core network device selects the corresponding operator identification code for the one or more terminals from a prestored operator identification code. If the operator device and the core network device are not the same device, a process in which the core network device obtains the operator identification code allocated by the operator device to the one or more terminals includes: The core network device receives the operator identification code of the one or more terminals from the operator device.

When the first information indicates to allocate the EPC for terminal management to the one or more terminals (including the first terminal), and the requester does not indicate, to the core network device, the EPC that is for terminal management and that corresponds to each of the one or more terminals (including the first terminal) indicated by the first information, the core network device may further obtain the EPC that is for terminal management and that is allocated by the operator device to the one or more terminals (including the first terminal).

The operator device and the core network device may be a same device, or may be different devices. If the operator device and the core network device are the same device, a process in which the core network device obtains the EPC that is for terminal management and that is allocated by the operator device to the one or more terminals includes: The core network device allocates the EPC for terminal management to the one or more terminals; or the core network device selects, for the one or more terminals, the corresponding EPC for terminal management from a prestored EPC for terminal management. If the operator device and the core network device are not the same device, a process in which the core network device obtains the EPC that is for terminal management and that is allocated by the operator device to the one or more terminals includes: The core network device receives, from the operator device, the EPC for terminal management for the one or more terminals.

When the first information indicates to allocate the key to the one or more terminals (including the first terminal), and the requester does not indicate, to the core network device, the key corresponding to each of the one or more terminals (including the first terminal) indicated by the first information, the core network device may further obtain the key allocated by the operator device to the one or more terminals (including the first terminal). Optionally, when the first information further indicates the key requirement, the core network device obtains, based on the key requirement, the key allocated by the operator device to the one or more terminals (including the first terminal).

The operator device and the core network device may be a same device, or may be different devices. If the operator device and the core network device are the same device, a process in which the core network device obtains the key allocated by the operator device to the one or more terminals includes: The core network device allocates the key to the one or more terminals, or the core network device selects the corresponding key for the one or more terminals from a prestored key. If the operator device and the core network device are not the same device, a process in which the core network device obtains the key allocated by the operator device to the one or more terminals includes: The core network device receives the key of the one or more terminals from the operator device.

Step 303: The core network device sends second information to the first terminal, where the second information indicates the first terminal to store the operator identification code.

Correspondingly, the first terminal receives the second information from the core network device.

The second information indicates the first terminal to store the operator identification code. For example, the second information includes the operator identification code allocated to the first terminal. For example, the second information is a write command.

In a possible implementation, the operator identification code is stored at a default storage location in the terminal, and the core network device does not need to indicate a storage location of the operator identification code to the terminal, so that signaling overheads can be reduced.

Therefore, in another possible implementation, the core network device may indicate the storage location of the operator identification code to the terminal. For example, on a basis that the second information indicates the first terminal to store the operator identification code, the second information further includes first location information for storing the operator identification code. For example, the first location information indicates a memory bank, for example, an EPC memory bank, a reserved memory bank, a TID memory bank, or a user memory bank. Storage locations that are for storing operator identification codes and that are indicated by the core network device to a plurality of terminals may be the same; or storage locations that are for storing operator identification codes and that are indicated by the core network device to terminals of a same type may be the same, and storage locations that are for storing operator identification codes and that are indicated by the core network device to terminals of different types may be different. In a specific implementation, designing may be performed based on different requirements. This is not limited in this application.

When a procedure of storing the operator identification code in the terminal is performed, the EPC memory bank of the terminal stores the default EPC stored by a manufacturer for the terminal or does not store the default EPC (in other words, the requester has not performed a procedure of storing, in the terminal, the EPC allocated by the requester to the terminal). In this case, in the procedure of storing the operator identification code in the terminal, the EPC for terminal management may also be stored in the terminal, and a procedure of storing the EPC for terminal management in the terminal does not need to be separately performed, so that signaling exchanging is reduced. In a possible implementation, on a basis that the second information indicates the first terminal to store the operator identification code, optionally, the second information further indicates the first terminal to store a first electronic product code EPC corresponding to the first terminal, where the first EPC may be allocated by the operator device to the first terminal, or the first EPC is from the requester. The first EPC is an EPC that is for terminal management and that is allocated by the operator device or the requester to the first terminal, and the first EPC uniquely identifies the first terminal.

In a possible implementation, the EPC for terminal management is stored at a default storage location in the terminal, and the core network device does not need to indicate a storage location of the EPC to the terminal, so that signaling overheads are reduced.

Therefore, in another possible implementation, the core network device may indicate, to the terminal, the storage location of the EPC for terminal management. For example, on a basis that the second information indicates the first terminal to store the first EPC, the second information further includes second location information for storing the first EPC. For example, the second location information indicates a memory bank, for example, the EPC memory bank. Storage locations that are for storing EPCs and that are indicated by the core network device to a plurality of terminals may be the same; or storage locations that are for storing EPCs and that are indicated by the core network device to terminals of a same type may be the same, and storage locations that are for storing EPCs and that are indicated by the core network device to terminals of different types may be different. In a specific implementation, designing may be performed based on different requirements. This is not limited in this application.

On a basis that the second information indicates the first terminal to store the operator identification code, optionally, in a possible implementation, the second information further indicates the first terminal to store the key. For example, the second information includes the key allocated to the first terminal.

In a possible implementation, the key is stored at a default storage location in the terminal, and the core network device does not need to indicate a storage location of the key to the terminal, so that signaling overheads can be reduced.

In another possible implementation, the core network device may indicate the storage location of the key to the terminal. For example, on a basis that the second information indicates the first terminal to store the key, the second information further includes third location information for storing the key. For example, the third location information indicates a memory bank, for example, the EPC memory bank, the reserved memory bank, the TID memory bank, or the user memory bank. Storage locations that are for storing keys and that are indicated by the core network device to a plurality of terminals may be the same; or storage locations that are for storing keys and that are indicated by the core network device to terminals of a same type may be the same, and storage locations that are for storing keys and that are indicated by the core network device to terminals of different types may be different. In a specific implementation, designing may be performed based on different requirements. This is not limited in this application.

Step 304: The first terminal stores the operator identification code.

When the first terminal stores the operator identification code, for example, the first terminal stores the operator identification code at the default storage location; or for another example, the second information includes the first location information for storing the operator identification code allocated to the first terminal, and the first terminal stores, at a first storage location corresponding to the first location information, the operator identification code allocated to the first terminal. In a possible example, the storage location corresponding to the first location information may include a storage location of the EPC in the terminal in the conventional technology. In this way, the operator identification code may be stored at the storage location of the EPC, and the operator identification code may replace a function of the EPC, and the EPC does not need to be stored in the terminal. If the default EPC is stored at the storage location of the EPC, the operator identification code may overwrite the default EPC.

When the second information further indicates the first terminal to store the first EPC corresponding to the first terminal, the first terminal may further store the first EPC. The first EPC is allocated by the operator device or the requester. The first EPC may overwrite the default EPC.

When the first terminal stores the first EPC, for example, the first terminal stores the first EPC at the default storage location; or for another example, the second information includes the second location information for storing the first EPC, and the first terminal stores the first EPC at a second storage location corresponding to the second location information. For example, the second location information indicates the EPC memory bank. If the default EPC is stored at the storage location of the EPC, the first EPC may overwrite the default EPC.

In the foregoing process, the operator identification code allocated by the operator device to the terminal is stored in the terminal, and the operator may manage the terminal based on the operator identification code. Optionally, the terminal further stores the EPC that is for terminal management and that is allocated by the operator device or the requester to the terminal, and the operator device or the requester may manage the terminal based on the EPC for terminal management.

When the second information further indicates the first terminal to store the key corresponding to the first terminal, the first terminal may further store the key. The key may be allocated by the operator device or the requester to the first terminal. When the first terminal stores the key, for example, the first terminal stores the key at the default storage location; or for another example, the second information includes the third location information for storing the key allocated to the first terminal, and the first terminal stores, at a third storage location corresponding to the third location information, the key allocated to the first terminal. The terminal stores the key allocated by the operator device or the requester to the terminal, and the operator device or the requester may perform authentication on the terminal based on the key.

When the first core network device and the second core network device are different core network devices, information is exchanged between the first core network device and the second core network device. The first core network device is, for example, an AMF, a UDM, a TMF, an AUSF, an NSSAAF, an SMF, a UPF, a PCF, an NEF, or a UDR, and the second core network device is, for example, an AMF, a UDM, a TMF, an AUSF, an NSSAAF, an SMF, a UPF, a PCF, an NEF, or a UDR. It may be understood that the first core network device may directly communicate with the second core network device, or may communicate with the second core network device through another core network device. The first core network device may directly communicate with the requester, or may communicate with the requester through another core network device. The second core network device may directly communicate with the terminal/access network device, or may communicate with the terminal/access network device through another core network device.

With reference to the communication procedure in FIG. 3, the following describes a communication procedure when the first core network device and the second core network device are different core network devices.

Step 301 may be replaced with the following: The requester sends the first information to the first core network device, and correspondingly, the first core network device receives the first information from the requester.

Step 302 may be replaced with the following: The first core network device obtains the operator identification code allocated by the operator device to the first terminal.

Before step 303, a new step is added: The first core network device sends first indication information to the second core network device, where the first indication information indicates to write the corresponding operator identification code into the one or more terminals (including the first terminal).

Correspondingly, the second core network device receives the first indication information from the first core network device.

The first indication information may be a request for writing the operator identification code into a blank tag.

On a basis that the first indication information indicates to write the corresponding operator identification code into the one or more terminals (including the first terminal), further optionally, the first indication information further includes the first location information for storing the operator identification code.

On a basis that the first indication information indicates to write the corresponding operator identification code into the one or more terminals (including the first terminal), further optionally, the first indication information further indicates to write the corresponding EPC for terminal management (the EPC for managing the first terminal is referred to as the first EPC) into the one or more terminals (including the first terminal), where the EPC for terminal management (including the first EPC) is allocated by the operator device to the first terminal; or the EPC for terminal management (including the first EPC) is from the requester. In a specific example, the first indication information includes an association relationship between the operator identification code and the EPC for terminal management, and the operator identification code and the EPC for terminal management that are allocated to each terminal may be determined based on the association relationship. The first indication information may be a request for writing the operator identification code and the EPC into a blank tag.

On a basis that the first indication information further indicates to write the corresponding first EPC into the one or more terminals (including the first terminal), further optionally, the first indication information further includes the second location information for storing the EPC for terminal management (including the first EPC).

On a basis that the first indication information indicates to write the corresponding operator identification code into the one or more terminals (including the first terminal), further optionally, the first indication information further indicates to write the corresponding key into the one or more terminals (including the first terminal). The key is allocated by the operator device to the first terminal, or the key is from the requester. In a specific example, the first indication information includes an association relationship between the operator identification code and the key, and the operator identification code and the key that are allocated to each terminal may be determined based on the association relationship. The first indication information may be a request for writing the operator identification code and the key into a blank tag.

In an optional example, the first indication information indicates to write the corresponding operator identification code, the EPC for terminal management, and the key into the one or more terminals (including the first terminal). For example, the first indication information includes the association relationship between the operator identification code, the EPC for terminal management, and the key. The operator identification code allocated to each terminal, the EPC for terminal management, and the key may be determined based on the association relationship. The first indication information may be a request for writing the operator identification code, the EPC for terminal management, and the key into a blank tag.

When the first information sent by the requester to the first core network device indicates the key requirement, and the first indication information indicates to write the corresponding key into the one or more terminals (including the first terminal), further optionally, the first indication information may further indicate the key requirement.

For example, the first indication information includes a default EPC range, and the default EPC range includes the default EPC of the first terminal. The second core network device determines, based on the default EPC range, that an operator identification code needs to be allocated to a terminal whose default EPC belongs to the default EPC range.

For example, the first indication information includes one or more default EPCs, and the one or more default EPCs include the default EPC of the first terminal. The second core network device determines, based on the one or more default EPCs, that an operator identification code needs to be allocated to a terminal whose default EPC belongs to the one or more default EPCs.

For example, the first indication information includes one or more target TID types, and the TID of the first terminal belongs to the target TID type. The second core network device determines, based on the one or more target TID types, that an operator identification code needs to be allocated to a terminal whose TID type belongs to the one or more target TID types.

In conclusion, it may be learned that the first indication information includes one or both of the following: the tag identifier TID type of the first terminal, and the default electronic product code EPC of the first terminal. The second core network device may determine the first terminal based on the information included in the first indication information, and certainly may further determine another terminal.

Optionally, on a basis that the first indication information indicates to write the corresponding operator identification code into the one or more terminals (including the first terminal), the first indication information may further include a service range. The service range is used to query the access network device.

Step 303 may be replaced with the following: The second core network device sends the second information to the first terminal.

Correspondingly, the first terminal receives the second information from the second core network device.

For specific details of the communication procedure, refer to the descriptions in FIG. 3. Details are not described again.

In an optional example, before the core network device (or the second core network device) sends the second information to the first terminal, the core network device (or the second core network device) first sends third information to the access network device, where the third information indicates to search for the one or more terminals (including the first terminal) or obtain the default EPC of the one or more terminals (including the first terminal). Correspondingly, the access network device receives the third information from the core network device (or the second core network device). The access network device searches for the one or more terminals (including the first terminal) based on the third information (the searching for the terminal may also be understood as terminal selection or terminal filtering), and the first terminal in the one or more found terminals accesses the access network device. After the first terminal accesses the access network device, the first terminal sends the default EPC of the first terminal to the core network device (or the second core network device) through the access network device. Correspondingly, the core network device (or the second core network device) receives the default EPC from the first terminal. Further, the core network device (or the second core network device) sends the second information to the first terminal.

The third information may be referred to as an inventory command or an inventory request. The third information may indicate the one or more terminals in one or more of the following manners.

For example, the third information includes the default EPC range, and the default EPC range includes the default EPC of the first terminal. The access network device determines, based on the default EPC range, that a terminal whose default EPC belongs to the default EPC range needs to be searched for, or that a default EPC in the default EPC range needs to be obtained.

For example, the third information includes the one or more default EPCs, and the one or more default EPCs include the default EPC of the first terminal. The access network device determines, based on the one or more default EPCs, that a terminal whose default EPC belongs to the one or more default EPCs needs to be searched for, or that the one or more default EPCs need to be obtained.

For example, the third information includes the one or more target TID types, and the TID of the first terminal belongs to the target TID type. The access network device determines, based on the one or more target TID types, that a terminal whose TID type belongs to the one or more target TID types needs to be searched for, or that a default EPC of a terminal whose TID type belongs to the one or more target TID types needs to be obtained.

In conclusion, it may be learned that the third information includes one or both of the following: the tag identifier TID type of the first terminal, and the default electronic product code EPC of the first terminal. The access network device may determine the first terminal based on the third information, and certainly may further determine another terminal.

In a possible implementation, a process in which the access network device searches for the one or more terminals (including the first terminal) based on the third information includes: The access network device sends, based on the third information, radio frequency information to a terminal in a coverage area of the access network device, to provide an excitation signal for the terminal in the coverage area of the access network device, so that the terminal sends a signal to the access network device. The access network device performs a selection operation on the terminal in the coverage area, to select the one or more terminals by performing the selection operation. Further, the access network device sends a query command to the selected one or more terminals (including the first terminal), to search for the one or more terminals (including the first terminal).

In a possible implementation, a process in which the first terminal in the one or more found terminals accesses the access network device includes: The one or more terminals initiate a random access procedure after receiving the query command, where one terminal (namely, the first terminal) successfully performs random access, in other words, accesses the access network device.

In a possible implementation, the random access procedure may be as follows: After receiving the query command, the one or more terminals separately send a random number to the access network device, and the access network device may correctly receive a random number, and feed back the correctly received random number to the terminal. The terminal that sends the random number determines that random access succeeds.

Optionally, the query command sent by the access network device to the one or more terminals includes a TID type of the one or more terminals or a default EPC of the one or more terminals. After receiving the query command, the one or more terminals may match the TID type in the query command with a TID type of the terminal, or match the default EPC in the query command with a default EPC of the terminal, and initiate a random access procedure (for example, send a random number to the access network device) after the matching succeeds. Certainly, the first terminal may also first initiate a random access procedure, and after the random access succeeds and before the default EPC of the first terminal is sent to the core network device, the first terminal matches information in the query command with information of the first terminal, and after the matching succeeds, performs a process of sending the default EPC of the first terminal to the core network device.

In a possible implementation, that the first terminal sends the default EPC of the first terminal to the core network device (or the second core network device) includes: The first terminal sends a request message to the core network device (or the second core network device) through the access network device, where the request message includes the default EPC of the first terminal. The access network device may transparently transmit the request message. The request message may be a registration request message, an access request message, a request message used for the access network device, or a request message used for network registration. A name of the request message is not limited in this application. The request message may be a non-access stratum (non-access stratum, NAS) message or a non-NAS message.

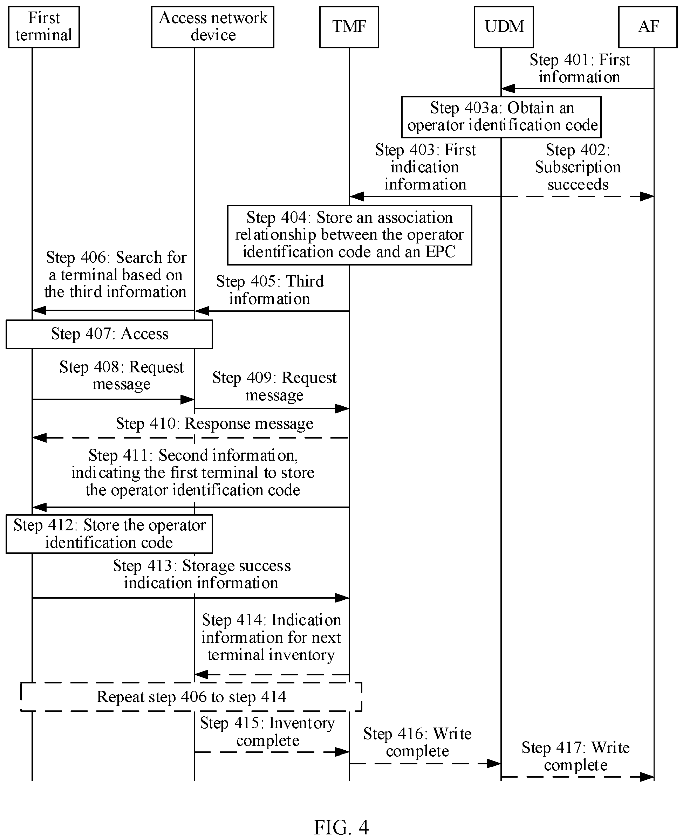

With reference to the communication system shown in FIG. 1b, FIG. 4 is a diagram of a specific communication procedure for storing an operator identification code in a first terminal. In the communication procedure, an example in which a requester is an AF, a first core network device is a UDM, and a second core network device is a TMF is used for description. The UDM and the AF may directly communicate with each other, or may communicate with each other through another core network device (for example, an NEF).

Step 401: The AF sends first information to the UDM, where the first information indicates one or more terminals, and the one or more terminals include the first terminal.

Correspondingly, the UDM receives the first information from the AF.

The AF may directly send the first information to the UDM, or send the first information to the UDM through another core network device (for example, the NEF).

For a process of step 401, refer to the process of step 301. Details are not described again.

Step 402: After the AF (which may be understood as an enterprise) pays an operator, it may be considered that subscription succeeds, and the UDM allocates an enterprise code to the AF, where the enterprise code uniquely identifies the AF.

The enterprise code may be replaced with an application code or a service code.

Step 403a: The UDM obtains an operator identification code allocated by an operator device to the one or more terminal devices.

After receiving the first information from the AF, the UDM may obtain the operator identification code allocated by the operator device to the one or more terminal devices. For example, the UDM allocates a respective corresponding operator identification code to one or more terminals that need to store an operator identification code, where different operator identification codes are allocated to different terminals. Certainly, the UDM may obtain, from the operator device, the operator identification code corresponding to the one or more terminals. For a specific process, refer to the process in which the core network device obtains the operator identification code allocated by the operator device to the first terminal described in step 302.

When the first information sent by the AF to the UDM in step 401 indicates to allocate an EPC for terminal management to the one or more terminals (including the first terminal), and the first information does not include the EPC that is for terminal management and that is for each of the one or more terminals (including the first terminal), the UDM may further obtain the EPC that is for terminal management and that is allocated by the operator device to the one or more terminals (including the first terminal). For a specific process, refer to step 302 in which the core network device obtains the EPC that is for terminal management and that is allocated by the operator device to the one or more terminals (including the first terminal). Different terminals correspond to different EPCs for terminal management.

When the first information sent by the AF to the UDM in step 401 indicates to allocate a key to the one or more terminals (including the first terminal), and the first information does not include the key corresponding to each of the one or more terminals (including the first terminal), the UDM may further obtain the key allocated by the operator device to the one or more terminals (including the first terminal), where keys corresponding to different terminals may be different or may be the same. For a specific process, refer to step 302 in which the core network device obtains the key allocated by the operator device to the one or more terminals (including the first terminal).

A specific example is described by using an example in which the UDM obtains the key corresponding to the one or more terminals (including the first terminal).

The UDM may check whether the key corresponding to the one or more terminals is locally stored. If the key is stored, the UDM may directly use the key. If the key is not locally stored, the UDM requests, from an NRF, information (such as address information) about a key storage network element. A network element that stores key information registers with the NRF. Therefore, the NRF knows the network element that stores the key information.

The NRF sends, to the UDM, the information about the key storage network element. Correspondingly, the UDM receives the information that is about the key storage network element and that is sent by the NRF. The network element is, for example, a UDR or an AUSF.

The UDM requests, from the key storage network element and based on the information about the network element, the key that corresponds to the one or more terminals and that is indicated by the first information. For example, the UDM sends a request message to the key storage network element, where the request message is used to request one or more keys. Optionally, the request message may further indicate a key requirement, and the key storage network element allocates the corresponding key to the one or more terminals based on the key requirement. Optionally, the request message may further indicate a default EPC code range and/or TID type.

The key storage network element sends, to the UDM, the key corresponding to the one or more terminals. Correspondingly, the UDM receives the key that corresponds to the one or more terminals and that is sent by the key storage network element.

In a specific example, both the operator identification code and the key may be obtained from the key storage network element. For example, the UDM sends a request message to the key storage network element, where the request message is used to request the operator identification code and the key that correspond to the one or more terminals. The key storage network element sends, to the UDM, the operator identification code and the key that correspond to each of the one or more terminals. Correspondingly, the UDM receives the operator identification code and the key that correspond to each of the one or more terminals and that are sent by the key storage network element.

For each terminal indicated by the first information from the AF, the UDM stores a mapping relationship between an operator identification code and a key that are allocated to the terminal. Further, optionally, for each terminal indicated by the first information from the AF, the UDM stores a mapping relationship between an operator identification code, an EPC for terminal management, and a key that are allocated to the terminal.

Step 403: The UDM sends first indication information to the TMF, where the first indication information indicates to write the corresponding operator identification code into the one or more terminals (including the first terminal).

Correspondingly, the TMF receives the first indication information from the UDM.

Further, optionally, the first indication information further includes first location information for storing the operator identification code.

Optionally, the first indication information further indicates to write the corresponding EPC for terminal management into the one or more terminals (including the first terminal). Further, optionally, the first indication information further includes second location information for storing the EPC for terminal management (including a first EPC).

Optionally, the first indication information further indicates to write the corresponding key into the one or more terminals (including the first terminal). Further, optionally, the first indication information further includes the third location information for storing the key. Further, optionally, the first indication information further includes a key requirement.

For a process of step 403, refer to the foregoing described process in which the first core network device sends the first indication information to the second core network device. Details are not described again.

It may be understood that, an operator identification code writing procedure may be separately performed for terminals of different types; or operator identification code writing procedures may be simultaneously performed for terminals of a plurality of types. For terminals of different types, a procedure of writing an EPC for terminal managements may be performed separately; or for terminals of a plurality of types, procedures of writing EPCs for terminal management may be simultaneously performed. A key writing procedure may be separately performed for terminals of different types, or key writing procedures may be simultaneously performed for terminals of a plurality of types.

Step 404: The TMF determines an access network device based on a service range.

If the first indication information indicates to write the corresponding operator identification code and EPC for terminal management into the one or more terminals (including the first terminal), the TMF stores an association relationship between the operator identification code and the EPC for terminal management.

If the first indication information indicates to write the corresponding operator identification code and key into the one or more terminals (including the first terminal), the TMF stores an association relationship between the operator identification code and the key.

If the first indication information indicates to write the corresponding operator identification code, EPC for terminal management, and key into the one or more terminals (including the first terminal), the TMF stores an association relationship between the operator identification code, the EPC for terminal management, and the key.

Step 405: The TMF sends third information to the access network device determined in step 404, where the third information indicates to search for the one or more terminals (including the first terminal).

Correspondingly, the access network device receives the third information from the TMF.

For a process of step 405, refer to the foregoing described process in which the second core network device sends the third information to the access network device. Details are not described again.

Step 406: The access network device searches for the one or more terminals (including the first terminal) based on the third information.

Terminal searching may also be understood as terminal selection or terminal filtering.

For a process of step 406, refer to the foregoing process in which the access network device searches for the one or more terminals (including the first terminal) based on the third information.

For example, the access network device sends radio frequency information to a terminal in a coverage area of the access network device based on the third information, to provide an excitation signal for the terminal in the coverage area of the access network device, so that the terminal sends a signal to the access network device. The access network device performs a selection operation on the terminal in the coverage area, to select the one or more terminals by performing the selection operation. Further, the access network device sends a query command to the selected one or more terminals (including the first terminal), to search for the one or more terminals (including the first terminal).

Optionally, the query command sent by the access network device to the one or more terminals includes a TID type of the one or more terminals or a default EPC of the one or more terminals.

Step 407: The first terminal in the one or more found terminals accesses the access network device.

For a process of step 407, refer to the foregoing described process in which the first terminal in the one or more found terminals accesses the access network device.

For example, after receiving the query command, the one or more terminals initiate a random access procedure, and one terminal (namely, the first terminal) successfully performs random access, in other words, accesses the access network device.

Optionally, the query command sent by the access network device to the one or more terminals includes the TID type of the one or more terminals or the default EPC of the one or more terminals. After receiving the query command, the one or more terminals may match the TID type in the query command with a TID type of the terminal, or match the default EPC in the query command with a default EPC of the terminal, and initiate a random access procedure after the matching succeeds.

After receiving the query command, the one or more terminals may match the TID type in the query command with the TOD type of the terminal, or match the default EPC in the query command with the default EPC of the terminal, and initiate a random access procedure after the matching succeeds. Certainly, the first terminal may alternatively first initiate a random access procedure. After random access succeeds, before step 408, the first terminal matches the information in the query command with information of the first terminal. After the matching succeeds, step 408 is performed.

Step 408: The first terminal sends a request message to the access network device.

Correspondingly, the access network device receives the request message from the first terminal.

Optionally, the request message includes a default EPC of the first terminal.

The request message may be a registration request message, an access request message, a request message used for the access network device, or a request message used for network registration. A name of the request message is not limited in this application. The request message may be a non-access stratum (non-access stratum, NAS) message or a non-NAS message.

Step 409: The access network device transparently transmits the request message to the TMF.

Step 410: The TMF sends a response message to the first terminal.

Correspondingly, the first terminal receives the response message from the TMF.

The response message may be a registration accept message, indication information indicating that access of the first terminal succeeds, an access success message, a response message for successful network access, or a response message for successful network registration. A name of the response message is not limited in this application.

For example, the TMF transparently transmits the response message to the first terminal through the access network device.

Step 411: The TMF sends second information to the first terminal, where the second information indicates the first terminal to store the operator identification code.

Correspondingly, the first terminal receives the second information from the core network device.

On a basis that the second information indicates the first terminal to store the operator identification code, optionally, the second information further includes the first location information for storing the operator identification code.

Optionally, the second information further indicates the first terminal to store the first EPC. Further, optionally, the second information further includes the second location information for storing the first EPC.

Optionally, the second information further indicates the first terminal to store the key. Further, optionally, the second information further includes the third location information for storing the key.

For a process of step 411, refer to the process of step 303. Details are not described again.

Step 412: The first terminal stores the operator identification code allocated to the first terminal.

Optionally, the first terminal may further store the first EPC allocated to the first terminal.

Optionally, the first terminal may further store the key allocated to the first terminal.

For a process of step 412, refer to the process of step 304. Details are not described again.

Step 413: The first terminal sends, to the TMF, storage success indication information.

Correspondingly, the TMF receives, from the first terminal, the storage success indication information.

In a specific example, the indication information may indicate that one or more of the operator identification code, the first EPC, and the key are successfully stored.

The storage success may be replaced with writing success, printing success, inventory success, or the like.

Step 414: The TMF sends, to the access network device, indication information for next terminal inventory.

Correspondingly, the access network device receives, from the TMF, the indication information for the next terminal inventory.

The inventory may be understood as that an operator identification code is written into (stored in or printed by) the terminal, and optionally, may further be understood as that an EPC for terminal management and/or a key are/is written into the terminal.

If not all the terminals indicated by the third information in step 405 are inventoried, step 406 to step 414 are repeatedly performed; or if all the terminals indicated by the third information in step 405 are inventoried, step 415 is performed.

For determining whether all the terminals are inventoried, in a possible implementation, the access network device may consider that all the terminals are inventoried if determining that a preset quantity of terminals are inventoried. For example, if there are 2000 matched terminals in a coverage area of the access network device, and the core network device needs to print only 1000 terminals, the access network device may determine that the inventory is completed after determining that the 1000 terminals are inventoried. In another possible implementation, if determining that no terminal responds, the access network device determines that the inventory is completed. For example, if the core network device needs to print 1000 terminals, 1000 terminals are deployed in the coverage area of the access network device. When determining that no terminal responds, the access network device may determine that the 1000 terminals are inventoried.

Step 415: The access network device sends, to the TMF, inventory complete indication information.

Inventory complete may be replaced with storage success, writing success, printing success, or the like.

In a specific example, the indication information may indicate that one or more of the operator identification code, the EPC for terminal management, and the key are successfully stored (or successfully written, or successfully printed).

Step 416: The TMF sends write complete indication information to the UDM.

Step 417: The UDM sends the write complete indication information to the AF.

In a specific example, the indication information may indicate that one or more of the operator identification code, the EPC for terminal management, and the key are written.

Writing complete may be replaced with writing success, inventory complete, subscription success, printing success, or the like.

Optionally, step 417 includes one or more of the following items allocated to the one or more (including the first terminal): an EPC code (an EPC for terminal management but not the default EPC) range, the operator identification code, and the key.

In a scenario in which the key is written into the terminal, when the UDM receives the first information from the AF, where the first information indicates to allocate the key to the one or more terminals (including the first terminal), and the first information does not include the key corresponding to each of the one or more terminals (including the first terminal), in step 403a of the example in FIG. 4, after learning, through the NRF, of the key storage network element, the UDM obtains, from the key storage network element, the key corresponding to the one or more terminals (including the first terminal), and sends the key corresponding to the one or more terminals to the TMF. In addition, there may be other possible implementations:
In a possible implementation a, the UDM learns, through the NRF, of information about the key storage network element, and sends the information about the key storage network element to the TMF. Then, the TMF obtains, based on the information about the key storage network element, the key corresponding to the one or more terminals (including the first terminal) from the key storage network element.

In a possible implementation b, the UDM indicates that the TMF needs to print a key for the one or more terminals. Then, the TMF learns, through the NRF, of the information about the key storage network element. Then, the TMF obtains, based on the information about the key storage network element, the key corresponding to the one or more terminals (including the first terminal) from the key storage network element.

With reference to the implementations a and b described above, the TMF obtains, from the key storage network element, the key corresponding to the one or more terminals (including the first terminal). In this example, there are a plurality of implementations.

In a possible implementation c, before the TMF receives the request message from the first terminal (for example, step 408 and step 409), the TMF obtains, from the key storage network element, the key corresponding to the one or more terminals (including the first terminal). This manner may be understood as that, before any one of the one or more terminals is found, keys corresponding to the one or more terminals (including the first terminal) are obtained in batches from the key storage network element.

In a possible implementation d, after the TMF receives the request message from the first terminal (for example, step 408 and step 409), the TMF obtains, from the key storage network element, the key corresponding to the one or more terminals (including the first terminal). This manner may be understood as that, when a 1^{st} terminal (namely, the first terminal) in the one or more terminals is found, keys corresponding to the one or more terminals (including the first terminal) are obtained in batches from the key storage network element.

In a possible implementation d, after the TMF receives the request message from the first terminal (for example, step 408 and step 409), the TMF obtains, from the key storage network element, the key corresponding to the first terminal. This manner may be understood as that, when any terminal is found, a key corresponding to the terminal is found from the key storage network element.

In the example in FIG. 4 and the other possible implementations a, b, c, and d described above, an example in which the first core network device is the UDM is used for description. In another example, the first core network device may alternatively be an NEF. For other details, still refer to the example in FIG. 4 and descriptions of other possible implementations a, b, c, and d. Details are not described again.

In addition, for writing three pieces of information, namely, the operator identification code, the EPC for terminal management, and the key into the one or more terminals, in this embodiment of this application, the operator identification code, the EPC for terminal management, and the key may be written into the one or more terminals in one procedure; the operator identification code, the EPC for terminal management, and the key may be written into the one or more terminals in three procedures; or any two of the operator identification code, the EPC for terminal management, and the key may be written into the one or more terminals in one procedure, and the remaining one of the operator identification code, the EPC for terminal management, and the key may be written into the one or more terminals in another procedure.

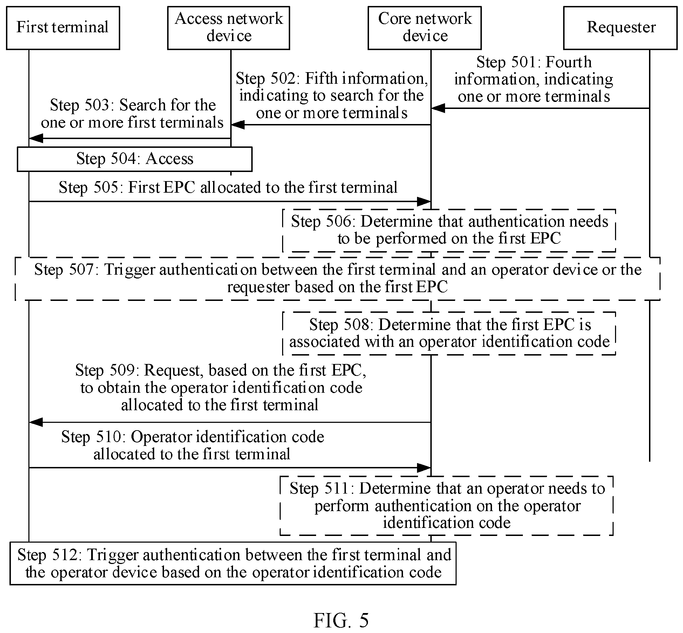

After the operator identification code is stored in the terminal, an operator may manage the terminal based on the operator identification code. Optionally, after the EPC for terminal management is stored in the terminal, the operator or the requester may manage the terminal based on the EPC for terminal management (all EPCs described in the following examples are EPCs used for terminal management, but are not default EPCs). With reference to FIG. 5, FIG. 6, and FIG. 7, the following describes a process in which an operator manages a terminal. An example in which a first core network device (a core network device that communicates with a requester) and a second core network device (a core network device that communicates with a terminal/an access network device) are a whole, and the first core network device and the second core network device are collectively referred to as a core network device is used for description. Alternatively, an example in which the first core network device and the second core network device are the same, and the first core network device and the second core network device are referred to as a core network device for short is used for description.

FIG. 5 is a possible flowchart of communication in which an operator manages a terminal according to an embodiment of this application. In FIG. 5, a capability of a first terminal is reporting an EPC by default. After accessing an access network device (for example, random access succeeds), the first terminal may actively send a first EPC allocated to the first terminal. After obtaining the first EPC of the first terminal, a core network device may request, based on the first EPC of the first terminal, an operator identification code allocated to the first terminal.

Step 501: A requester sends fourth information to the core network device, where the fourth information indicates one or more terminals (including the first terminal).

Correspondingly, the core network device receives the fourth information from the requester.

It may be understood that, in addition to indicating the first terminal, the fourth information may further indicate another terminal. The core network device may determine, based on the fourth information, the one or more terminals that need to be managed, where the one or more terminals that need to be managed include the first terminal. Management may be understood as performing authentication on a terminal based on an operator identification code, and optionally, may further be understood as performing an operation on the terminal. Processes of managing all the terminals are similar. In the example in FIG. 5, an example in which only the first terminal is managed is used for description.

The fourth information may indicate the first terminal in one or more of the following manners:
For example, the fourth information includes an EPC range, and the EPC range includes the first EPC of the first terminal. The fourth information may be understood as an EPC range that needs to be managed and that is sent by the requester to the core network device. The core network device determines, based on the EPC range, that a terminal whose EPC belongs to the EPC range needs to be managed.

For example, the fourth information includes one or more EPCs, and the one or more EPCs include the first EPC of the first terminal. The fourth information may be understood as one or more EPCs that need to be managed and that are indicated by the requester to the core network device. The core network device determines, based on the one or more EPCs, that a terminal whose EPC belongs to the one or more EPCs needs to be managed.

For example, the fourth information includes one or more target TID types, and a TID of the first terminal belongs to the target TID type. The fourth information may be understood as one or more target TID types that need to be managed and that is indicated by the requester to the core network device. The core network device determines, based on the one or more target TID types, that a terminal whose TID type belongs to the one or more target TID types needs to be managed.

For example, the fourth information includes information about the requester. The information about the requester may indicate the EPC range or the one or more EPCs corresponding to (or managed by) the requester. The EPC range or the one or more EPCs corresponding to (or managed by) the requester include the first EPC of the first terminal. The core network device may determine, based on the information about the requester, a terminal whose EPC belongs to the EPC range or the one or more EPCs corresponding to (or managed by) the requester needs to be managed.

For the information about the requester, refer to the descriptions in step 301. Details are not described again.

The EPC range or the one or more EPCs corresponding to (or managed by) the requester may be stored or configured on the core network device, or may be stored or configured on another core network device. The core network device may send the information about the requester to another core network device, and the another core network device obtains, based on the information about the requester, the EPC range or the one or more EPCs corresponding to (or managed by) the requester, and sends the EPC range or the one or more EPCs to the core network device. For example, the another core network device may include a core network device such as a UDM, a UDR, an AUSF, an NEF, a PCF, an SMF, a TMF, or an NSSAAF.

In conclusion, it may be learned that the fourth information includes one or more of the following: a tag identifier TID type of the first terminal, the first electronic product code EPC of the first terminal, and the information about the requester. The core network device may determine the first terminal based on the first information, and certainly may further determine another terminal.

In a possible implementation, the first information may indicate to perform a first operation on the one or more terminals (including the first terminal). The first operation may be an operation of obtaining an identifier of the first terminal (which may also be referred to as an inventory operation, a stocktaking operation, or inventory), a read operation, a write operation, a delete operation, an encrypt operation, an access operation, a block write operation, a block erase operation, a kill operation, or the like. For example, the first information includes information about the first operation, and the information about the first operation indicates the first operation. Further, optionally, the first information further includes an operation parameter corresponding to the first operation. For example, an operation parameter corresponding to a read operation may include a read memory bank, a start byte address of the read memory bank, a quantity of bytes of the read memory bank, and the like. An operation parameter corresponding to a write operation may include a write memory bank, a start byte of the read memory bank, and written data. In addition, the operation of obtaining the identifier of the first terminal (which may also be referred to as an inventory operation, a stocktaking operation, or inventory) may not be carried in the first information. For example, when the first information does not include the first operation, it may indicate that the first information is used to obtain the identifier of the first terminal.

Optionally, on a basis of indicating the first terminal, the fourth information may further include a service range. For example, the service range includes target area information A, where the target area information A indicates an area corresponding to one or more terminals to which an operator identification code needs to be allocated. For example, the target area information A may be a geographical location, a municipal location, or 3GPP location information (such as a tracking area (tracking area, TA) list or a cell list) corresponding to the one or more terminals to which the operator identification code needs to be allocated. The service range is used to query the access network device.

Step 502: The core network device sends fifth information to the access network device, where the fifth information indicates to search for the one or more terminals (including the first terminal).

Correspondingly, the access network device receives the fifth information from the core network device.

It may be understood that, in addition to indicating to search for the first terminal, the fifth information may further indicate to search for another terminal. The access network device may determine, based on the fifth information, the one or more terminals that need to be searched for, where the one or more terminals that need to be searched for include the first terminal.

The fifth information may be referred to as an inventory request or an inventory request. The fifth information may indicate the first terminal in one or more of the following manners.

For example, the fifth information includes the EPC range, and the EPC range includes the EPC of the first terminal. The access network device determines, based on the EPC range, that a terminal whose EPC belongs to the EPC range needs to be searched for.

For example, the fifth information includes the one or more EPCs, and the one or more EPCs include the EPC of the first terminal. The access network device determines, based on the one or more EPCs, that a terminal whose EPC belongs to the one or more EPCs needs to be searched for.

For example, the fifth information includes the one or more target TID types, and the TID of the first terminal belongs to the target TID type. The access network device determines, based on the one or more target TID types, that a terminal whose TID type belongs to the one or more target TID types needs to be searched for.

For example, the fifth information includes an operator identification code associated with an EPC that is of the one or more terminals and that is for terminal management (including an operator identification code associated with the first EPC of the first terminal). The access network device determines, based on one or more operator identification codes, that a terminal whose operator identification code belongs to the one or more operator identification codes needs to be searched for.

For example, when the fourth information includes the information about the requester (the requester manages the one or more terminals (including the first terminal)), the core network device may determine, based on the information about the requester, a public land mobile network identifier PLMN ID allocated to the one or more terminals (including the first terminal), and the fifth information includes the PLMN ID allocated to the one or more terminals (including the first terminal). Further, optionally, the core network device determines, based on the information about the requester, an enterprise identifier allocated to the one or more terminals (including the first terminal), where the fifth information further includes the enterprise identifier allocated to the one or more terminals (including the first terminal). The enterprise identifier is an enterprise code, an application code, or a service code allocated by an operator device to the first terminal (refer to step 402); or the enterprise identifier is a service identifier in a CompanyPrefix in an EPC memory bank of the one or more terminals (including the first terminal). The enterprise identifier may also be replaced with a service identifier or an application identifier. It may be understood that the enterprise identifier, the application identifier, and the service identifier may uniquely identify a type of terminal. A definition of "type" may be flexible. For example, an enterprise is a type, a department or several departments of an enterprise is/are a type, a service is a type, and several services are a type. Names of the enterprise identifier, the application identifier, and the service identifier should not limit the scenario.

In a specific example, when the fifth information includes the PLMN ID and the enterprise identifier, the EPC may be optional. When no EPC is included, it may be understood that the fifth information indicates to search for all EPCs managed by an enterprise corresponding to the enterprise identifier. When the EPC is included, it may be understood that the fifth information indicates to search for an EPC that matches the EPC included in the fifth information and that is in an EPC managed by an enterprise corresponding to the enterprise identifier.

In conclusion, it may be learned that the fifth information includes one or more of the following: the tag identifier TID type of the first terminal, the first EPC of the first terminal, the operator identification code associated with the first EPC of the first terminal, a PLMN ID allocated to the first terminal, and an enterprise identifier allocated to the first terminal. The access network device may determine the first terminal based on the fifth information, and certainly may further determine another terminal.

Step 503: The access network device searches for the one or more terminals (including the first terminal) based on the fifth information.

Terminal searching may also be understood as terminal selection or terminal filtering.

In a possible implementation, a process in which the access network device searches for the one or more terminals (including the first terminal) based on the fifth information includes: The access network device sends, based on the fifth information, radio frequency information to a terminal in a coverage area of the access network device, to provide an excitation signal for the terminal in the coverage area of the access network device, so that the terminal sends a signal to the access network device. The access network device performs a selection operation on the terminal in the coverage area, to select the one or more terminals by performing the selection operation. Further, the access network device sends a query command to the selected one or more terminals (including the first terminal), to search for the one or more terminals (including the first terminal).

Optionally, the query command sent by the access network device to the one or more terminals includes one or more of the following: a TID type of the one or more terminals, an EPC of the one or more terminals, the operator identification code associated with the EPC of the one or more terminals, the PLMN ID allocated to the one or more terminals, and the enterprise identifier allocated to the one or more terminals.

Step 504: The first terminal in the one or more found terminals accesses the access network device.

In a possible implementation, a process in which the first terminal in the one or more found terminals accesses the access network device includes: The one or more terminals initiate a random access procedure after receiving the query command, where one terminal (namely, the first terminal) successfully performs random access, in other words, accesses the access network device.

In a possible implementation, the random access procedure may be as follows: After receiving the query command, the one or more terminals separately send a random number to the access network device, and the access network device may correctly receive a random number, and feed back the correctly received random number to the terminal. The terminal that sends the random number determines that random access succeeds.

Optionally, the query command sent by the access network device to the one or more terminals includes one or more of the following: the TID type of the one or more terminals, the EPC of the one or more terminals, the operator identification code associated with the EPC of the one or more terminals, the PLMN ID allocated to the one or more terminals, and the enterprise identifier allocated to the one or more terminals. After receiving the query command, the terminal may match information in the query command with information of the terminal. After the matching succeeds, the terminal initiates a random access procedure (for example, sends a random number to the access network device). Certainly, the first terminal may alternatively first initiate a random access procedure. After random access succeeds, before step 505, the first terminal matches the information in the query command with information of the first terminal. After the matching succeeds, step 505 is performed.

Step 505: The first terminal sends, to the core network device, the first EPC allocated to the first terminal.

Correspondingly, the core network device receives the first EPC allocated to the first terminal.

When the capability of the first terminal is reporting the EPC by default, after accessing the access network device (for example, the random access succeeds), the first terminal may actively send, to the core network device through the access network device, the first EPC allocated to the first terminal.

In a possible implementation, that the first terminal sends, to the core network device, the first EPC allocated to the first terminal includes: The first terminal sends a request message to the core network device through the access network device, where the request message includes the first EPC allocated to the first terminal. The access network device transparently transmits the request message. The request message may be a registration request message, an access request message, a request message used for the access network device, or a request message used for network registration. A name of the request message is not limited in this application. The request message may be a non-access stratum (non-access stratum, NAS) message or a non-NAS message.

Step 506: The core network device may determine, based on the first EPC and subscription information of the first terminal, that an operator or the requester needs to perform authentication on the first EPC, and then perform step 507.

If determining that the authentication does not need to be performed on the first EPC, the core network device may not need to perform step 507.

The subscription information includes information about whether the authentication needs to be performed on the EPC.

Step 506 is an optional step, and may not be performed.

Step 507: The core network device triggers authentication between the first terminal and the operator device or the requester based on the first EPC. Step 507 is an optional step, and may not be performed.

Step 508: The core network device may determine that the first EPC is associated with the operator identification code, and then perform step 509.

If the first EPC is not associated with the operator identification code, step 509 may not be performed. For example, in step 404, the TMF stores an association relationship between the operator identification code and the EPC for terminal management.

Step 508 is an optional step, and may not be performed.

Step 509: The core network device requests, from the first terminal based on the first EPC, to obtain the operator identification code allocated to the first terminal.

Correspondingly, the first terminal receives the request that is from the core network device and that is for requesting, from the first terminal based on the first EPC, to obtain the operator identification code allocated to the first terminal.

In a possible implementation, the core network device sends, to the first terminal, a request for obtaining the operator identification code allocated to the first terminal. Correspondingly, the first terminal receives, from the core network device, the request for obtaining the operator identification code allocated to the first terminal, where the request includes the EPC of the first terminal.

A sequence of step 506, step 507, step 508, and step 509 is not limited.

Step 510: The first terminal sends, to the core network device, the operator identification code allocated to the first terminal.

Correspondingly, the core network device receives the operator identification code allocated to the first terminal.

Step 511: The core network device may determine, based on the operator identification code and the subscription information of the first terminal, that the operator needs to perform authentication on the operator identification code. The subscription information includes information about whether the authentication needs to be performed on the operator identification code.

Step 511 is an optional step, and may not be performed.

Step 512: The core network device triggers authentication between the first terminal and the operator device based on the operator identification code.

The authentication based on the operator identification code may be understood as follows: In an authentication procedure between the terminal and the operator device, a parameter (a random number, a check value, and ciphertext information) used for the authentication and the operator identification code are in a same message. In this way, it may be determined that the authentication is performed for the terminal identified by the operator identification code. Alternatively, the terminal is first determined as a unique terminal based on the operator identification code. In an authentication procedure, even if a message carrying an authentication parameter (a random number, a check value, and ciphertext information) does not carry the operator identification code, it may be determined that the authentication is performed for the terminal identified by the operator identification code.

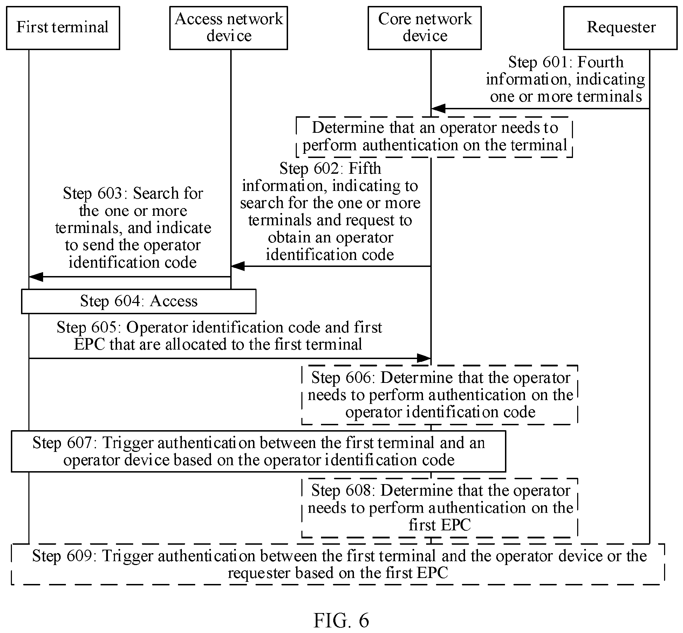

FIG. 6 is a possible flowchart of communication in which an operator manages a terminal according to an embodiment of this application. In FIG. 6, a capability of a first terminal is reporting an EPC by default. After accessing an access network device (for example, random access succeeds), the first terminal may actively send a first EPC allocated to the first terminal. In a process of searching for the first terminal, the access network device indicates the first terminal to send an operator identification code allocated to the first terminal. In this way, after accessing the access network device (for example, the random access succeeds), the first terminal may send the operator identification code allocated to the first terminal.

Step 601: A requester sends fourth information to a core network device, where the fourth information indicates one or more terminals (including the first terminal).

Correspondingly, the core network device receives the fourth information from the requester.

For a process of step 601, refer to the process of step 501. Details are not described again.

Step 602: The core network device sends fifth information to the access network device, where the fifth information indicates to search for the one or more terminals (including the first terminal) and request to obtain an operator identification code allocated to the one or more terminals (including the first terminal).

Correspondingly, the access network device receives the fifth information from the core network device.

For a process of step 602, refer to the process of step 502. On this basis, the fifth information may indicate, by using a specific information format, to request to obtain the operator identification code allocated to the one or more terminals (including the first terminal), or the fifth information includes indication information for requesting to obtain the operator identification code, so as to indicate, to the access network device, to request to obtain the operator identification code allocated to the one or more terminals (including the first terminal).

The indication information for requesting to obtain the operator identification code may occupy one bit or more bits, and a value of the bit indicates to request to obtain the operator identification code. For example, when a value of one bit at a specific location is extended or the value of the bit is set to 1, it indicates to obtain the operator identification code is obtained; and when the value of the bit at the location is 0 or is set to 0, it indicates not to obtain the operator identification code.

The indication information for requesting to obtain the operator identification code may be considered as a mark for SUPI replication or a mark for SUPI-like replication.

Optionally, before performing step 602, the core network device may determine that an operator needs to perform authentication on the one or more terminals. In this case, the fifth information may indicate to request to obtain the operator identification code allocated to the first terminal. If the operator does not need to perform the authentication, the fifth information may not indicate to request to obtain the operator identification code allocated to the first terminal.

Step 603: The access network device searches for the one or more terminals (including the first terminal) based on the fifth information, and indicates the one or more terminals (including the first terminal) to send the operator identification code allocated to the terminal.

Terminal searching may also be understood as terminal selection or terminal filtering.

For a process in which the access network device searches for the one or more terminals (including the first terminal) based on the fifth information, refer to the descriptions in step 503. Details are not described again.

Optionally, a query command sent by the access network device to the one or more terminals further needs to include indication information for sending the operator identification code allocated to the terminal, to indicate the terminal to send the operator identification code allocated to the terminal.

The indication information for sending the operator identification code may occupy one bit or even more bits, and a value of the bit indicates to request to obtain the operator identification code. For example, when the value of the bit at the location is 1 or set to 1, it indicates to obtain the operator identification code; and when the value or the value is set to 0, it indicates not to obtain the operator identification code.

The indication information for requesting to obtain the operator identification code may be considered as a mark for SUPI replication or a mark for SUPI-like replication.

Step 604: The first terminal in the one or more found terminals accesses the access network device.

For a process of step 604, refer to the descriptions of step 504. Details are not described again.

Step 605: The first terminal sends, to the core network device, the operator identification code and the first EPC that are allocated to the first terminal.

Correspondingly, the core network device receives the operator identification code and the first EPC that are allocated to the first terminal.

The capability of the first terminal is reporting the EPC by default. After accessing the access network device (for example, the random access succeeds), the first terminal may actively send the first EPC allocated to the first terminal. In a process of searching for the first terminal, the access network device indicates the first terminal to send the operator identification code allocated to the first terminal. In this way, after accessing the access network device (for example, the random access succeeds), the first terminal may send the operator identification code allocated to the first terminal.

In a possible implementation, that the first terminal sends, to the core network device, the operator identification code and the first EPC that are allocated to the first terminal includes: The first terminal sends a request message to the core network device through the access network device, where the request message includes the operator identification code and the first EPC that are allocated to the first terminal. The access network device transparently transmits the request message. The request message may be a registration request message, an access request message, a request message used for the access network device, or a request message used for network registration. A name of the request message is not limited in this application. The request message may be a non-access stratum (non-access stratum, NAS) message or a non-NAS message.

Step 606: The core network device may determine, based on the operator identification code and subscription information of the first terminal, that the operator needs to perform authentication on the operator identification code. The subscription information includes information about whether the authentication needs to be performed on the operator identification code.

Step 606 is an optional step, and may not be performed.

Step 607: The core network device triggers authentication between the first terminal and an operator device based on the operator identification code.

For a process of step 607, refer to the process of step 512. Details are not described again.

Step 608: The core network device may determine, based on the first EPC and the subscription information of the first terminal, that the operator or the requester needs to perform authentication on the first EPC, and then perform step 609.

If determining that the authentication does not need to be performed on the first EPC, the core network device may not need to perform step 600. The subscription information includes information about whether the authentication needs to be performed on the EPC.

Step 609: The core network device triggers authentication between the first terminal and the operator device or the requester based on the first EPC of the first terminal.

Step 609 is an optional step, and may not be performed.

A sequence of step 606, step 607, step 608, and step 609 is not limited.

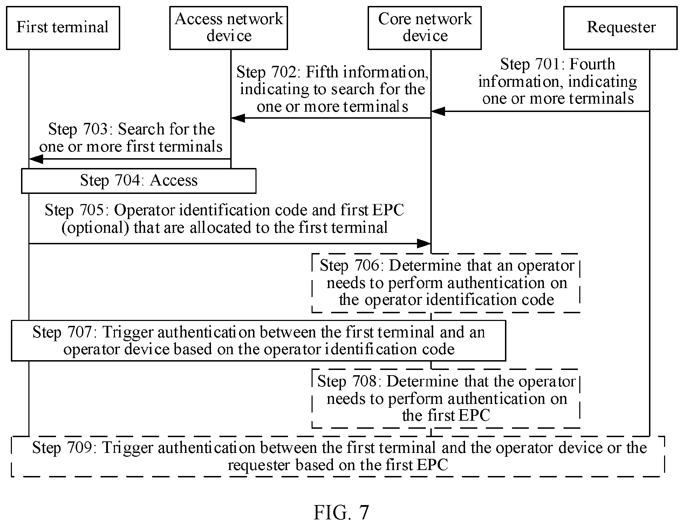

FIG. 7 is a possible flowchart in which an operator manages a terminal according to an embodiment of this application. In FIG. 6, a capability of a first terminal is reporting an operator identification code by default. After accessing an access network device (for example, random access succeeds), the first terminal may actively send an operator identification code allocated to the first terminal.

Step 701: A requester sends fourth information to a core network device, where the fourth information indicates the first terminal.

Correspondingly, the core network device receives the fourth information from the requester.

For step 701, refer to the descriptions of step 501. Details are not described again.

Step 702: The core network device sends fifth information to an access network device, where the fifth information indicates to search for one or more terminals (including the first terminal).

Correspondingly, the access network device receives the fifth information from the core network device.

For step 702, refer to the descriptions of step 502. Details are not described again.

Step 703: The access network device searches for the one or more terminals (including the first terminal) based on the fifth information.

For step 703, refer to the descriptions of step 503. Details are not described again.

Step 704: The first terminal in the one or more found terminals accesses the access network device.

For a process of step 704, refer to the descriptions of step 504. Details are not described again.

Step 705: The first terminal sends, to the core network device, the operator identification code allocated to the first terminal.

Correspondingly, the core network device receives the operator identification code allocated to the first terminal.

In a possible implementation, that the first terminal sends, to the core network device, the operator identification code allocated to the first terminal includes: The first terminal sends a request message to the core network device through the access network device, where the request message includes the operator identification code allocated to the first terminal. The access network device transparently transmits the request message. The request message may be a registration request message, an access request message, a request message used for the access network device, or a request message used for network registration. A name of the request message is not limited in this application. The request message may be a non-access stratum (non-access stratum, NAS) message or a non-NAS message.

Step 706: The core network device may determine, based on the operator identification code and subscription information of the first terminal, that an operator needs to perform authentication on the operator identification code. The subscription information includes information about whether the authentication needs to be performed on the operator identification code.

Step 706 is an optional step, and may not be performed.

Step 707: The core network device triggers authentication between the first terminal and an operator device based on the operator identification code.

For a process of step 707, refer to the process of step 512. Details are not described again.

In a possible implementation, if the capability of the first terminal further includes reporting an EPC by default, a first EPC allocated to the first terminal may be further received in step 705.

In a possible implementation, if the capability of the first terminal does not include reporting an EPC by default, a manner of obtaining the EPC may include:
Manner 1: After the operator identification code allocated to the first terminal is obtained, the first terminal receives the request that is from the core network device and that is for requesting, from the first terminal based on the operator identification code, to obtain the first EPC allocated to the first terminal.

In a possible implementation, the core network device sends, to the first terminal, a request for obtaining the first EPC allocated to the first terminal. Correspondingly, the first terminal receives, from the core network device, the request for obtaining the first EPC allocated to the first terminal, where the request includes the operator identification code of the first terminal.

Manner 2: In step 702, the fifth information sent by the core network device to the access network device indicates to search for the one or more terminals (including the first terminal), and further indicates to request to obtain an EPC allocated to the one or more terminals (including the first terminal).

The fifth information may indicate, by using a specific information format, to request to obtain the EPC allocated to the one or more terminals (including the first terminal), or the fifth information includes indication information for requesting to obtain the EPC, so as to indicate, to the access network device, to request to obtain the EPC allocated to the one or more terminals (including the first terminal). The indication information for requesting to obtain the EPC may be a mark for EPC replication.

After the first EPC is obtained, step 708 may be performed: The core network device may determine, based on the first EPC and the subscription information of the first terminal, that the operator or the requester needs to perform authentication on the first EPC, and then perform step 709. If the authentication does not need to be performed, step 709 may not be performed. Step 708 is an optional step, and may not be performed.

Step 709: The core network device may trigger authentication between the first terminal and the operator device or the requester based on the first EPC.

A sequence of step 706, step 707, step 708, and step 709 is not limited.

In a possible implementation, when a first operation is one or more of a read operation, a write operation, a delete operation, an encrypt operation, an access operation, a block write operation, a block erase operation, or a kill operation. After the first terminal is authenticated, the core network device may further perform the first operation on the first terminal.

In a possible implementation, after the first terminal is authenticated, the core network device may send a response message to the first terminal. Correspondingly, the first terminal receives the response message from the core network device. The response message may be a registration accept message, indication information indicating that access of the first terminal succeeds, an access success message, a response message for successful network access, or a response message for successful network registration. A name of the response message is not limited in this application. For example, the core network device transparently transmits the response message to the first terminal through the access network device.

In a possible implementation, after the first terminal is authenticated, the core network device may further send, to the access network device, indication information for next terminal inventory. Correspondingly, the access network device receives, from the core network device, the indication information for the next terminal inventory. Inventory may be understood as managing a next terminal, or performing the first operation on the next terminal.

For the example in FIG. 5, if not all the terminals indicated in the fifth information in step 502 are inventoried, step 503 to step 512 may be repeatedly performed.

For the example in FIG. 6, if not all the terminals indicated in the fifth information in step 602 are inventoried, step 603 to step 609 may be repeatedly performed.

For the example in FIG. 7, if not all the terminals indicated in the fifth information in step 702 are inventoried, step 703 to step 709 may be repeatedly performed.

If all the terminals indicated in the fifth information are inventoried, the access network device may send, to the core network device, inventory complete indication information. The core network device may send an inventory result to the requester.

When a first core network device and a second core network device are different core network devices, information is exchanged between the first core network device and the second core network device. With reference to the communication procedures in FIG. 5, FIG. 6, and FIG. 7, the following describes a communication procedure when the first core network device and the second core network device are different core network devices.

Step 501, step 601, and step 701 may be replaced with that the requester sends the fourth information to the first core network device, and correspondingly, the first core network device receives the fourth information from the requester.

Step 502, step 601, and step 701 may be replaced with that the second core network device sends the fifth information to the access network device, and correspondingly, the second core network device receives the fifth information from the requester.

Before step 502, step 602, and step 702, a new step is added: The first core network device sends second indication information to the second core network device, where the second indication information indicates the one or more terminals.

Correspondingly, the second core network device receives the second indication information from the first core network device.

For example, for content included in the second indication information, refer to the fifth information sent by the core network device to the access network device in step 502.

In other steps, the core network device is the first core network device when communicating with the first terminal or the access network device, and the core network device is the second core network device when communicating with the requester. For specific details of the communication procedure, refer to the descriptions in FIG. 5, FIG. 6, and FIG. 7. Details are not described again.

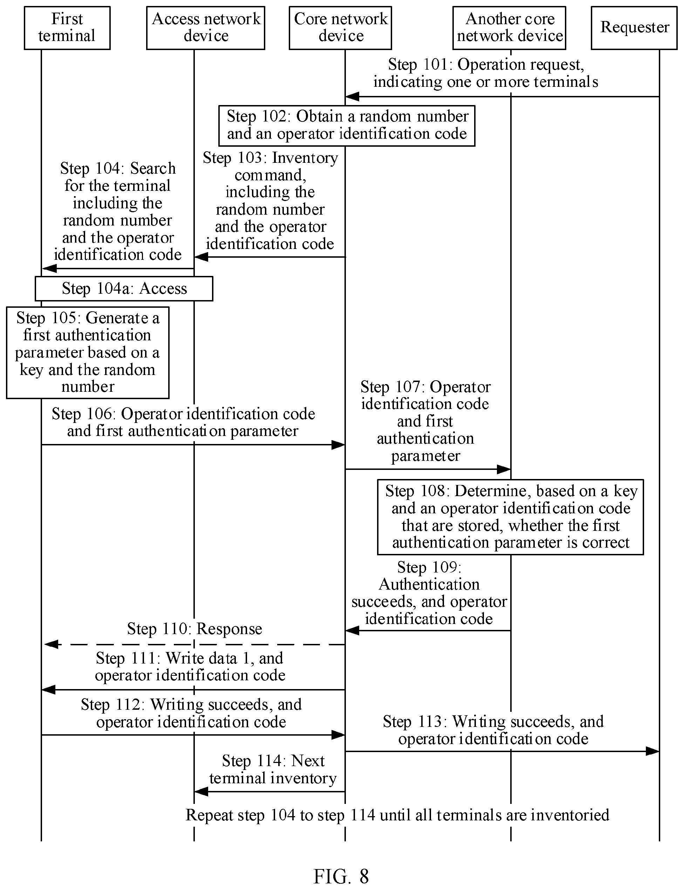

After a key is written into a terminal, a network may perform authentication on the terminal based on the key. FIG. 8 is a schematic flowchart in which a network performs authentication on a terminal based on a key.

Step 101: A requester (for example, an AF) sends an operation request to a core network device (for example, a TMF), where the operation request indicates one or more terminals (including a first terminal).

Correspondingly, the core network device receives the operation request from the requester.

In a specific example, the operation request indicates to write data 1 into the one or more terminals.

For the operation request, refer to the descriptions of the fourth information in step 501. For a process of step 101, refer to the descriptions of the process of step 501. Details are not described again.

Step 102: If the core network device (for example, the TMF) determines that operator-side authentication needs to be performed on the one or more terminals indicated in the operation request, the core network device obtains a random number and an operator identification code that are required for the authentication.

For example, the core network device may obtain and store the corresponding random number and operator identification code with reference to the manner described in the example or the manners described in the possible implementations a, b, c, and d in FIG. 4.

Step 103: The core network device (for example, the TMF) sends an inventory command to an access network device, where the inventory command instructs to search for the one or more terminals (including the first terminal).

Correspondingly, the access network device receives the inventory command from the core network device (for example, the TMF).

The inventory command includes the operator identification code and the random number that correspond to the one or more terminals. The operator identification code corresponding to the one or more terminals may be represented by using an operator identification code range.

When a plurality of terminals are inventoried, keys corresponding to the plurality of terminal s may be the same or different, and random numbers corresponding to the plurality of terminals may also be the same or different. If the keys and the random numbers are different, the keys and the random numbers may be arranged in order in the inventory command, so that the access network device identifies a key and a random number that correspond to a same terminal. For example, in a key 1, a key 2, a key 3, a random number 1, a random number 2, and a random number 3, the key 1 and the random number 1 correspond to a same terminal, the key 2 and the random number 2 correspond to a same terminal, and the key 3 and the random number 3 correspond to a same terminal.

Step 104: The access network device searches for the one or more terminals (including the first terminal) according to the inventory command.

Terminal searching may also be understood as terminal selection or terminal filtering. For a specific process, refer to the foregoing descriptions. Details are not described again.

If the random numbers corresponding to the plurality of terminals are the same, the access network device may send the random numbers to the corresponding terminals in a search process.

If the random numbers corresponding to the plurality of terminals are different, the access network device may send the random numbers to the corresponding terminals after step 104a and before step 105.

Step 104a: Random access of a terminal (for example, the first terminal) succeeds.

If the random numbers corresponding to the plurality of terminals are different, after step 104a, the first terminal may send a first EPC or an operator identification code of the first terminal to the access network device, and the access network device identifies the first terminal based on the first EPC or the operator identification code, and sends, to the first terminal, a random number corresponding to the first terminal.

Step 105: The first terminal generates a first authentication parameter based on a pre-printed key and the received random number.

For example, the first authentication parameter is an identity authentication result (Authentication result, RES).

Step 106: The first terminal sends a request message to the core network device (for example, the TMF) through the access network device.

Correspondingly, the core network device (for example, the TMF) receives the request message from the first terminal.

Optionally, the request message includes the operator identification code of the first terminal and the first authentication parameter generated in step 105.

The request message may be a registration request message, an access request message, a request message used for the access network device, or a request message used for network registration. A name of the request message is not limited in this application. The request message may be a non-access stratum (non-access stratum, NAS) message or a non-NAS message.

Step 107: The core network device (for example, the TMF) sends an authentication request message to another core network device (for example, a UDR or an AUSF).

The another core network device (for example, the UDR or the AUSF) receives the authentication request message from the core network device (for example, the TMF).

The authentication request message includes the operator identification code and the first authentication parameter from the first terminal in step 106.

The another core network device is a core network device or an authentication server that is configured to determine, based on an operator identification code and a key that are stored, whether the authentication parameter is correct.

Step 108: The another core network device determines, based on the operator identification code and the key that are stored for the first terminal, whether the first authentication parameter is correct.

The another core network device stores an association relationship between an operator identification code and a key, and the another core network device may find, based on the operator identification code of the first terminal in step 107, the key associated with the operator identification code of the first terminal.

The another core network device decrypts the first authentication parameter based on the found key. If the decryption succeeds, it is determined that the first authentication parameter is correct, and a network successfully authenticates the first terminal. If the decryption fails, it is determined that the first authentication parameter is incorrect, and the network fails to authenticate the first terminal.

Step 109: The another core network device sends, to the core network device, indication information indicating that the network successfully authenticates the first terminal.

The core network device receives, from the another core network device, the indication information indicating that the network successfully authenticates the first terminal.

If the network fails to authenticate the first terminal, the another core network device sends, to the core network device, indication information indicating that the network fails to authenticate the first terminal. The core network device receives, from the another core network device, the indication information indicating that the network fails to authenticate the first terminal.

In an example, a message flag bit may be set to indicate whether the authentication succeeds. For example, if the message flag bit is set to 1, it indicates that the network successfully authenticates the first terminal; or if the message flag bit is set to 0, it indicates that the network fails to authenticate the first terminal.

Optionally, the indication information indicating that the network successfully authenticates the first terminal or the indication information indicating that the network fails to authenticate the first terminal includes the operator identification code of the first terminal, and the first terminal is identified by using the operator identification code of the first terminal.

Optionally, in step 110, the core network device sends a response message to the first terminal.

Correspondingly, the first terminal receives the response message from the core network device.

The response message may be a registration accept message, indication information indicating that access of the first terminal succeeds, an access success message, a response message for successful network access, or a response message for successful network registration. A name of the response message is not limited in this application.

For example, the core network device transparently transmits the response message to the first terminal through the access network device.

After step 102 to step 110, the network completes the authentication on the first terminal. If the network successfully authenticates the first terminal, the core network device (for example, the TMF) may write the data 1 into the first terminal based on the operation request in step 101. If the network fails to authenticate the first terminal, a subsequent process is not performed.

Step 111: The core network device (for example, the TMF) sends, to the first terminal, indication information for writing the data 1.

Optionally, the indication information includes the operator identification code of the first terminal.

For example, the core network device transparently transmits the indication information to the first terminal through the access network device.

Step 112: The first terminal sends writing success indication information to the core network device (for example, the TMF).

Optionally, the indication information includes the operator identification code of the first terminal.

Step 113: The core network device (for example, the TMF) sends the writing success indication information to the requester (for example, the AF).

Optionally, the indication information includes the operator identification code of the first terminal.

Step 114: The core network device sends, to the access network device, indication information for next terminal inventory.

Correspondingly, the access network device receives, from the TMF, the indication information for the next terminal inventory.

A sequence of step 113 and step 114 is not limited.

Step 104 to step 114 described above are repeatedly performed until data is written into the one or more found terminals indicated in the inventory command in step 103, in other words, all the terminals are inventoried.

In another scenario, if the operation request in step 101 indicates to read the data 1 from the one or more terminals, in step 111, the core network device (for example, the TMF) sends, to the first terminal, indication information for reading the data 1; in step 112, the first terminal sends, to the core network device (for example, the TMF), reading success indication information, where the indication information includes the read data 1; and in step 113, the core network device (for example, the TMF) sends, to the requester (for example, the AF), reading and writing success indication information, where the indication information includes the read data 1. Step 104 to step 114 described above are repeatedly performed until data of the one or more found terminals indicated in the inventory command in step 103 is read, in other words, all the terminals are inventoried.

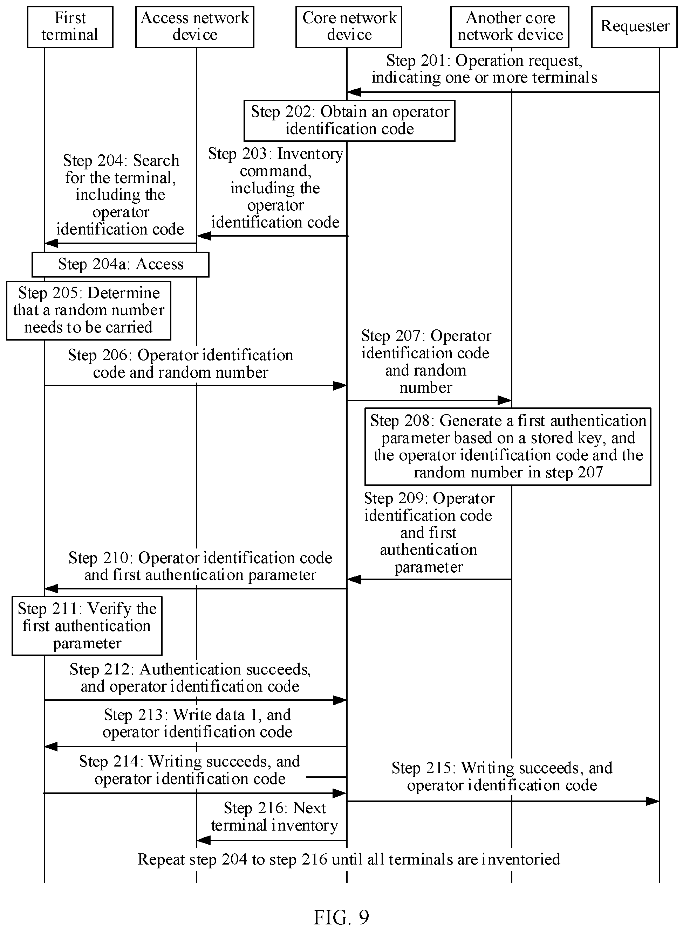

After a key is written into a terminal, the terminal may perform authentication on a network based on the key. FIG. 9 is a schematic flowchart in which a terminal performs authentication on a network based on a key.

Step 201: A requester (for example, an AF) sends an operation request to a core network device (for example, a TMF), where the operation request indicates one or more terminals (including a first terminal).

Correspondingly, the core network device receives the operation request from the requester.

In a specific example, the operation request indicates to read data 1 from the one or more terminals.

For the operation request, refer to the descriptions of the fourth information in step 501. For a process of step 201, refer to the descriptions of the process of step 501. Details are not described again.

Step 202: The core network device obtains an operator identification code corresponding to the one or more terminals.

Step 203: The core network device (for example, the TMF) sends an inventory command to an access network device, where the inventory command instructs to search for the one or more terminals (including the first terminal).

Correspondingly, the access network device receives the inventory command from the core network device (for example, the TMF).

The inventory command includes the operator identification code corresponding to the one or more terminals. The operator identification code corresponding to the one or more terminals may be represented by using an operator identification code range.

Step 204: The access network device searches for the one or more terminals (including the first terminal) according to the inventory command.

Terminal searching may also be understood as terminal selection or terminal filtering. For a specific process, refer to the foregoing descriptions. Details are not described again.

Step 204a: Random access of a terminal (for example, the first terminal) succeeds.

Step 205: The first terminal may determine, by itself, whether a random number needs to be carried during replication of an operator identification code. If the first terminal determines that the random number needs to be carried during the replication of the operator identification code, the random number is carried in step 206.

Step 206: The first terminal sends a request message to the core network device (for example, the TMF) through the access network device.

Correspondingly, the core network device (for example, the TMF) receives the request message from the first terminal.

Optionally, the request message includes the operator identification code and the random number of the first terminal. The random number may be pre-stored in the first terminal, or may be generated by the first terminal.

The request message may be a registration request message, an access request message, a request message used for the access network device, or a request message used for network registration. A name of the request message is not limited in this application. The request message may be a non-access stratum (non-access stratum, NAS) message or a non-NAS message.

Step 207: The core network device (for example, the TMF) sends an authentication request message to another core network device (for example, a UDR or an AUSF).

The another core network device (for example, the UDR or the AUSF) receives the authentication request message from the core network device (for example, the TMF).

The authentication request message includes the operator identification code and the random number from the first terminal in step 206.

The another core network device is a core network device or an authentication server that is configured to calculate an authentication parameter (for example, a MAC) based on an operator identification code and a random number that are stored.

Step 208: The another core network device generates a first authentication parameter (for example, the MAC) based on a stored key, and the operator identification code and the random number in step 207.

Step 209: The another core network device sends authentication response information to the core network device.

The core network device receives the authentication response information from the another core network device.

The authentication response information includes the first authentication parameter. Optionally, the authentication response information includes the operator identification code of the first terminal.

Step 210: The core network device sends a response message to the first terminal.

Correspondingly, the first terminal receives the response message from the core network device.

The response message includes the first authentication parameter. Optionally, the response message includes the operator identification code of the first terminal.

The response message may be a registration accept message, indication information indicating that access of the first terminal succeeds, an access success message, a response message for successful network access, or a response message for successful network registration. A name of the response message is not limited in this application.

For example, the core network device transparently transmits the response message to the first terminal through the access network device.

Step 211: The first terminal generates a second authentication parameter based on the operator identification code and a key that are stored in the first terminal and the random number sent in step 206, and verifies the received first authentication parameter by using the second authentication parameter generated by the first terminal.

In other words, the first terminal determines whether the second authentication parameter generated by the first terminal is the same as the received first authentication parameter, and if the second authentication parameter generated by the first terminal is the same as the received first authentication parameter, determines that the first terminal successfully authenticates a network; or if the second authentication parameter generated by the first terminal is different from the received first authentication parameter, determines that the first terminal fails to authenticate a network.

Step 212: When determining that the first terminal successfully authenticates the network, the first terminal sends authentication success indication information to the core network device.

When determining that the first terminal fails to authenticate the network, the first terminal may send authentication failure indication information to the core network device.

In an example, a message flag bit may be set to indicate whether the authentication succeeds. For example, if the message flag bit is set to 1, it indicates that the first terminal successfully authenticates the network; or if the message flag bit is set to 0, it indicates that the first terminal fails to authenticate the network.

After step 202 to step 212, the first terminal completes the authentication on the network. When the first terminal successfully authenticates the network, the core network device (for example, the TMF) may write the data 1 into the first terminal based on the operation request in step 201. If the first terminal fails to authenticate the network, a subsequent process is not performed.

Step 213: The core network device (for example, the TMF) sends, to the first terminal, indication information for writing the data 1.

Optionally, the indication information includes the operator identification code of the first terminal.

For example, the core network device transparently transmits the indication information to the first terminal through the access network device.

Step 214: The first terminal sends writing success indication information to the core network device (for example, the TMF).

Optionally, the indication information includes the operator identification code of the first terminal.

Step 215: The core network device (for example, the TMF) sends the writing success indication information to the requester (for example, the AF).

Optionally, the indication information includes the operator identification code of the first terminal.

Step 216: The core network device sends, to the access network device, indication information for next terminal inventory.

Correspondingly, the access network device receives, from the TMF, the indication information for the next terminal inventory.

Step 204 to step 216 described above are repeatedly performed until data is written into the one or more found terminals indicated in the inventory command in step 203, in other words, all the terminals are inventoried.

In another scenario, if the operation request in step 201 indicates to read the data 1 from the one or more terminals, in step 213, the core network device (for example, the TMF) sends, to the first terminal, indication information for reading the data 1; in step 214, the first terminal sends, to the core network device (for example, the TMF), reading success indication information, where the indication information includes the read data 1; and in step 215, the core network device (for example, the TMF) sends, to the requester (for example, the AF), reading and writing success indication information, where the indication information includes the read data 1. Step 204 to step 216 described above are repeatedly performed until data of the one or more found terminals indicated in the inventory command in step 203 is read, in other words, all the terminals are inventoried.

When a subscribed enterprise has an inventory requirement or more other operations, a requester sends an inventory request to a core network device. The core network device determines, based on an EPC range registered by (or subscribed to, or managed by) the enterprise, whether an EPC in the inventory request belongs to the enterprise.

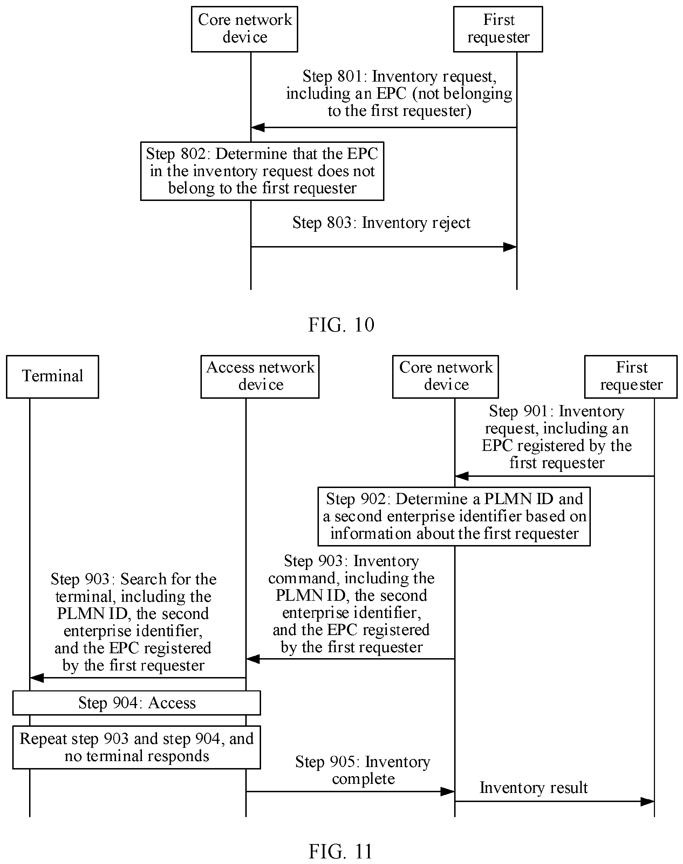

FIG. 10 is a flowchart of communication in a case of enterprise mismatch.

Step 801: A first requester (which may be understood as a first enterprise) sends an inventory request to a core network device, where the inventory request includes an EPC range or one or more EPCs.

Correspondingly, the core network device receives the inventory request from the first requester.

Step 802: The core network device determines that the EPC in the inventory request does not belong to an EPC range registered by (or subscribed to, or managed by) the first requester.

In a possible implementation, the core network device may verify, by using subscription information of an enterprise stored in the core network device or another core network device, whether the EPC in the inventory request belongs to the EPC range registered by the first requester.

For example, the core network device determines that the EPC in the inventory request belongs to an EPC range registered by (or subscribed to, or managed by) a second requester (which may be understood as a second enterprise).

Step 803: The core network device sends inventory reject indication information to the first requester.

Correspondingly, the first requester receives the inventory reject indication information sent by the core network device.

The inventory reject indication information may be understood as alarm information or information indicating no query.

Optionally, the inventory reject indication information carries a cause. For example, the cause is that the EPC in the inventory request does not belong to the EPC range registered by the first requester.

For step 801 in FIG. 10, refer to step 501 in FIG. 5, step 601 in FIG. 6, and step 701 in FIG. 7. The inventory request may be understood as the fourth information in step 501, step 601, and step 701, where the fourth information includes the EPC range or the one or more EPCs. Other details are not described again.

FIG. 10 is combined with FIG. 5, FIG. 6, and FIG. 7. This may be understood as that step 802 may be performed before step 502, step 602, and step 702. After it is determined that the EPC in the inventory request does not belong to the EPC range registered by the first requester, step 803 may be performed. After it is determined that the EPC in the inventory request belongs to the EPC range registered by the first requester, step 503, step 603, step 703, and subsequent steps may continue to be performed.

In an example in which a terminal is searched for by using an enterprise identifier, a case in which an enterprise that sends an inventory request is different from an enterprise to which an EPC in the inventory request belongs may also occur. The enterprise identifier is an enterprise code, an application code, or a service code allocated by the operator device to the first terminal (refer to step 402); or the service identifier is a service identifier in a CompanyPrefix in an EPC memory bank of the one or more terminals (including the first terminal).

FIG. 11 is a flowchart of communication in a case of enterprise mismatch.

Step 901: A first requester (which may be understood as a first enterprise) sends an inventory request to a core network device, where the inventory request indicates one or more terminals registered by (or subscribed to, or managed by) a second requester (which may be understood as a second enterprise).

Correspondingly, the core network device receives the inventory request from the first requester.

The inventory request may include an EPC range managed by the second enterprise, or an EPC of the one or more terminals, to indicate the one or more terminals managed by the second requester.

Optionally, the inventory request may further include a service range, and the service range is used to query an access network device.

Step 902: The core network device may determine, based on information about the first requester, a public land mobile network identifier PLMN ID and an enterprise identifier that are allocated to the terminal.

It may be understood that the enterprise identifier determined based on the information about the first requester is an identifier of the first enterprise.

Step 903: The core network device sends an inventory command to the access network device, where the inventory command includes the PLMN ID and the identifier of the first enterprise that are determined in step 902, and an EPC registered by the second enterprise in step 901.

Correspondingly, the access network device receives the inventory command from the core network device.

Step 904: The access network device searches for the terminal according to the inventory command.

Terminal searching may also be understood as terminal selection or terminal filtering. For a specific process, refer to the foregoing descriptions. Details are not described again.

For example, a query command sent by the access network device to the one or more terminals includes the PLMN ID, the identifier of the first enterprise, and the EPC registered by the second enterprise.

Step 905: The first terminal in the one or more found terminals accesses the access network device.

Step 904 and step 905 are repeatedly performed, and the access network device always cannot receive a reply from the terminal. The access network device sends, to the core network device, inventory complete indication information. The core network device sends an inventory result to the first requester, where the inventory result may be empty.

In another possible example, when step 904 and step 905 are performed (or repeatedly performed), a terminal of the first enterprise may respond. This case may be applicable to a case in which the EPC registered by the second enterprise is the same as an EPC registered by the first enterprise. The inventory result may include terminal information of the first enterprise.

The foregoing describes the method in embodiments of this application, and the following describes apparatuses in embodiments of this application. The method and the apparatus are based on a same technical idea. The method and the apparatus have similar principles for resolving problems. Therefore, for implementations of the apparatus and the method, refer to each other. Details are not repeated herein.

In embodiments of this application, the apparatus may be divided into functional modules based on the foregoing method examples. For example, the apparatus may be divided into functional modules corresponding to functions, or two or more functions may be integrated into one module. These modules may be implemented in a form of hardware, or may be implemented in a form of a software functional module. It should be noted that, in embodiments of this application, module division is an example, and is merely logical function division. In a specific implementation, another division manner may be used.

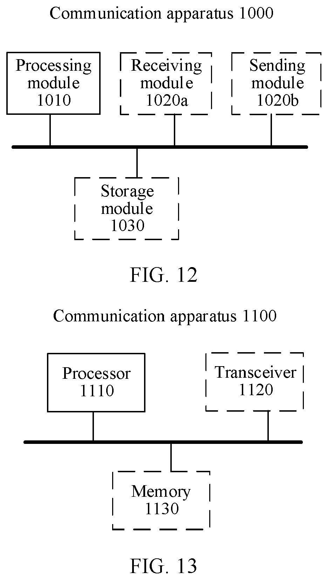

Based on a same technical idea as the foregoing method, FIG. 12 provides a diagram of a structure of a communication apparatus 1000. The communication apparatus 1000 may include one or more of the following: a processing module 1010, a receiving module 1020a, a sending module 1020b, and a storage module 1030. The processing module 1010 may be separately connected to the storage module 1030, the receiving module 1020a, and the sending module 1020b. The storage module 1030 may also be connected to the receiving module 1020a and the sending module 1020b.

In an example, the receiving module 1020a and the sending module 1020b may alternatively be integrated together, and are defined as a transceiver module.

In an example, the communication apparatus 1000 may be a core network device, or may be a chip or a functional unit used in the core network device. The communication apparatus 1000 has any function of the core network device in the foregoing method. For example, the communication apparatus 1000 can perform the steps performed by the core network device in the methods in FIG. 2 to FIG. 11.

The receiving module 1020a may perform a receiving action performed by the core network device in the foregoing method embodiments.

The sending module 1020b may perform a sending action performed by the core network device in the foregoing method embodiments.

The processing module 1010 may perform an action other than the sending action and the receiving action in the actions performed by the core network device in the foregoing method embodiments.

In an example, the receiving module 1020a is configured to receive first information from a requester, where the first information indicates a first terminal; the processing module 1010 is configured to obtain an operator identification code allocated by an operator device to the first terminal; and the sending module 1020b is configured to send second information to the first terminal, where the second information indicates the first terminal to store the operator identification code.

In an example, the operator identification code includes a public land mobile network identifier PLMN ID.

In an example, the operator identification code further includes one or more of the following: a first electronic product code EPC, an enterprise code allocated to the first terminal, and a unique identification code that is of the first terminal in the operator device and that is mapped from the first electronic product code EPC, where the first EPC is allocated by the operator device, or the first EPC is from the requester.

In an example, the second information further includes first location information for storing the operator identification code.

In an example, the second information further indicates the first terminal to store the first electronic product code EPC corresponding to the first terminal, where the first EPC is allocated by the operator device to the first terminal, or the first EPC is from the requester.

In an example, the second information further includes second location information for storing the first EPC.

In an example, the first information includes one or more of the following:
a tag identifier TID type of the first terminal, a default electronic product code EPC of the first terminal, and information about the requester, where the requester manages the first terminal.

In an example, the sending module 1020b is further configured to: send third information to an access network device, where the third information indicates to search for the first terminal; and receive the default electronic product code EPC from the first terminal.

In an example, the third information includes one or both of the following: the tag identifier TID type of the first terminal, and the default electronic product code EPC of the first terminal.

In an example, the receiving module 1020a is further configured to receive fourth information from the requester, where the fourth information indicates the first terminal; the sending module 1020b is further configured to send fifth information to the access network device, where the fifth information indicates to search for the first terminal; the receiving module 1020a is further configured to receive the first EPC allocated to the first terminal; the sending module 1020b is further configured to request, from the first terminal based on the first EPC, to obtain the operator identification code allocated to the first terminal; the receiving module 1020a is further configured to receive the operator identification code allocated to the first terminal; and the processing module 1010 is further configured to trigger authentication between the first terminal and the operator device based on the operator identification code.

In an example, the receiving module 1020a is further configured to receive fourth information from the requester, where the fourth information indicates the first terminal; the sending module 1020b is further configured to send fifth information to the access network device, where the fifth information indicates to search for the first terminal and request to obtain the operator identification code allocated to the first terminal; the receiving module 1020a is further configured to receive the operator identification code allocated to the first terminal; and the processing module 1010 is further configured to trigger authentication between the first terminal and the operator device based on the operator identification code.

In an example, the receiving module 1020a is further configured to receive fourth information from the requester, where the fourth information indicates the first terminal; the sending module 1020b is further configured to send fifth information to the access network device, where the fifth information indicates to search for the first terminal; the receiving module 1020a is further configured to receive the operator identification code allocated to the first terminal; and the processing module 1010 is further configured to trigger authentication between the first terminal and the operator device based on the operator identification code.

In an example, the fourth information includes the information about the requester, and the requester manages the first terminal; and the processing module 1010 is further configured to determine, based on the information about the requester, a public land mobile network identifier PLMN ID allocated to the first terminal, and the fifth information includes the allocated PLMN ID.

In an example, an enterprise identifier allocated to the first terminal is determined based on the information about the requester, and the fifth information further includes the allocated enterprise identifier.

In an example, the fourth information includes one or more of the following: the first electronic product code EPC of the first terminal, the TID type of the first terminal, and the information about the requester, where the requester manages the first terminal; and the fifth information includes one or more of the following: the first electronic product code EPC of the first terminal, an operator identification code associated with the first electronic product code EPC of the first terminal, and the TID type of the first terminal.

In an example, the processing module 1010 is further configured to determine, based on the operator identification code and subscription information of the first terminal, that an operator needs to perform authentication on the operator identification code.

In an example, the storage module 1030 may store computer-executable instructions of the method performed by the core network device, so that the processing module 1010, the receiving module 1020a, and the sending module 1020b perform the method performed by the core network device in the foregoing examples.

For example, the storage module may include one or more memories. The memory may be a component, in one or more devices or circuits, configured to store a program or data. The storage module may be a register, a cache, a RAM, or the like. The storage module may be integrated with the processing module. The storage module may be a ROM or another type of static storage device that can store static information and instructions. The storage module may be independent of the processing module.

The transceiver module may be an input/output interface, a pin, a circuit, or the like.

In an example, the communication apparatus 1000 may be a first terminal, or may be a chip or a functional unit used in the first terminal. The communication apparatus 1000 has any function of the first terminal in the foregoing method. For example, the communication apparatus 1000 can perform the steps performed by the first terminal in the methods in FIG. 2 to FIG. 9.

The receiving module 1020a may perform a receiving action performed by the first terminal in the foregoing method embodiment.

The sending module 1020b may perform a sending action performed by the first terminal in the foregoing method embodiment.

The processing module 1010 may perform an action other than a sending action and a receiving action in the actions performed by the first terminal in the foregoing method embodiment.

In an example, the receiving module 1020a is configured to receive second information from a core network device, where the second information indicates the first terminal to store an operator identification code, and the operator identification code is allocated by an operator device to the first terminal; and the processing module 1010 is configured to store the operator identification code.

In an example, the second information further includes first location information for storing the operator identification code; and the processing module 1010 is specifically configured to store the operator identification code at a first storage location corresponding to the first location information.

In an example, the second information further indicates the first terminal to store a first electronic product code EPC corresponding to the first terminal, where the first EPC is allocated by the operator device, or the first EPC is from a requester; and the processing module 1010 is specifically configured to store the first EPC.

In an example, the second information further includes second location information for storing the first EPC; and the processing module 1010 is specifically configured to store the first EPC at a second storage location corresponding to the second location information.

In an example, the sending module 1020b is configured to send a default electronic product code EPC of the first terminal to a second core network device through an access network device.

In an example, the storage module 1030 may store computer-executable instructions of the method performed by the first terminal, so that the processing module 1010, the receiving module 1020a, and the sending module 1020b perform the method performed by the first terminal in the foregoing example.

For example, the storage module may include one or more memories. The memory may be a component, in one or more devices or circuits, configured to store a program or data. The storage module may be a register, a cache, a RAM, or the like. The storage module may be integrated with the processing module. The storage module may be a ROM or another type of static storage device that can store static information and instructions. The storage module may be independent of the processing module.

The transceiver module may be an input/output interface, a pin, a circuit, or the like.

As a possible product form, the apparatus may be implemented by using a general bus architecture.

FIG. 13 is a schematic block diagram of a communication apparatus 1100.

The communication apparatus 1100 may include one or more of the following: a processor 1110, a transceiver 1120, and a memory 1130. The transceiver 1120 may be configured to receive a program or instructions and transmit the program or the instructions to the processor 1110. Alternatively, the transceiver 1120 may be configured to perform communication interaction between the communication apparatus 1100 and another communication device, for example, exchange control signaling and/or service data. The transceiver 1120 may be a code and/or data read/write transceiver, or the transceiver 1120 may be a signal transmission transceiver between the processor and the transceiver. The processor 1110 and the memory 1130 are electrically coupled.

In an example, the communication apparatus 1100 may be a core network device, or may be a chip used in the core network device. It should be understood that the apparatus has any function of the core network device in the foregoing method. For example, the communication apparatus 1100 can perform the steps performed by the core network device in the methods in FIG. 2 to FIG. 11. For example, the memory 1130 is configured to store a computer program or instructions. The processor 1110 may be configured to invoke the computer program or the instructions stored in the memory 1130, to perform the method performed by the core network device in the foregoing example, or perform, through the transceiver 1120, the method performed by the core network device in the foregoing example.

The processing module 1010 in FIG. 12 may be implemented by using the processor 1110.

The receiving module 1020a and the sending module 1020b in FIG. 12 may be implemented by using the transceiver 1120. Alternatively, the transceiver 1120 includes a receiver and a transmitter. The receiver performs a function of the receiving module, and the transmitter performs a function of the sending module.

The storage module 1030 in FIG. 12 may be implemented by using the memory 1130.

In an example, the communication apparatus 1100 may be a first terminal, or may be a chip used in the first terminal. It should be understood that the apparatus has any function of the first terminal in the foregoing method. For example, the communication apparatus 1100 can perform the steps performed by the first terminal in the methods in FIG. 2 to FIG. 9. For example, the memory 1130 is configured to store a computer program. The processor 1110 may be configured to invoke the computer program or instructions stored in the memory 1130, to perform the method performed by the first terminal in the foregoing example, or perform, through the transceiver 1120, the method performed by the first terminal in the foregoing example.

The processing module 1010 in FIG. 12 may be implemented by using the processor 1110.

The receiving module 1020a and the sending module 1020b in FIG. 12 may be implemented by using the transceiver 1120. Alternatively, the transceiver 1120 includes a receiver and a transmitter. The receiver performs a function of the receiving module, and the transmitter performs a function of the sending module.

The storage module 1030 in FIG. 12 may be implemented by using the memory 1130.

As a possible product form, the apparatus may be implemented by using a general-purpose processor (the general-purpose processor may also be referred to as a chip or a chip system).

In a possible implementation, a general-purpose processor that implements an apparatus used in a core network device or a first terminal includes a processing circuit (where the processing circuit may also be referred to as a processor); and optionally, further includes an input/output interface and a storage medium (where the storage medium may also be referred to as a memory) that are internally connected to and communicate with the processing circuit. The storage medium is configured to store instructions executed by the processing circuit, to perform the method performed by the core network device in the foregoing example.

The processing module 1010 in FIG. 12 may be implemented by using the processing circuit.

The receiving module 1020a and the sending module 1020b in FIG. 12 may be implemented by using the input/output interface. Alternatively, the input/output interface includes an input interface and an output interface. The input interface performs a function of the receiving module, and the output interface performs a function of the sending module.

The storage module 1030 in FIG. 12 may be implemented by using the storage medium.

As a possible product form, the apparatus in embodiments of this application may alternatively be implemented by using the following: one or more FPGAs (field programmable gate arrays), a PLD (programmable logic device), a controller, a state machine, gate logic, a discrete hardware component, any other appropriate circuit, or any combination of circuits that can perform various functions described in this application.

An embodiment of this application further provides a computer-readable storage medium that stores a computer program. When the computer program is executed by a computer, the computer may be enabled to perform the foregoing communication method. In other words, the computer program includes instructions for implementing the foregoing communication method.

An embodiment of this application further provides a computer program product. The computer program product includes computer program code. When the computer program code is run on a computer, the computer is enabled to perform the foregoing communication method.

An embodiment of this application further provides a communication system. The communication system includes at least two of the following: a core network device that performs the foregoing communication method, a first terminal, another core network device, and a requester.

In addition, the processor mentioned in embodiments of this application may be a central processing unit (central processing unit, CPU) or a baseband processor. The baseband processor and the CPU may be integrated or separated, or may be a network processor (network processor, NP) or a combination of a CPU and an NP. The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL) and another programmable logic device, a discrete gate or a transistor logic device, a discrete hardware component, or the like, or any combination thereof. The general-purpose processor may be a microprocessor, or the processor may be any conventional processor or the like.

The memory mentioned in embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory described in this application aims to include but is not limited to these memories and any memory of another proper type.

The transceiver mentioned in embodiments of this application may include a separate transmitter and/or a separate receiver, or the transmitter and the receiver may be integrated. The transceiver may operate as indicated by a corresponding processor. Optionally, the transmitter may correspond to a transmitter machine in a physical device, and the receiver may correspond to a receiver machine in the physical device.

A person of ordinary skill in the art may be aware that, in combination with the examples described in embodiments disclosed in this specification, method steps and units may be implemented by using electronic hardware, computer software, or a combination thereof. To clearly describe interchangeability between the hardware and the software, the foregoing has generally described steps and compositions of each embodiment based on functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located at one place, or may be distributed on a plurality of network units. Some or all of the units may be selected based on actual requirements to achieve the objectives of the solutions of embodiments of this application.

In addition, the functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in this application essentially, or the part contributing to the conventional technology, or all or some of the technical solutions may be represented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes: any medium that can store program code, such as a USB flash drive, a removable hard disk drive, a read-only memory (read-only memory, ROM), a random access memory (random access memory, RAM), a magnetic disk, or an optical disc.

Although preferred embodiments of this application are described, persons skilled in the art can make changes and modifications to these embodiments after they learn of a basic inventive concept. Therefore, the following claims are intended to be construed as to cover the preferred embodiments and all changes and modifications falling within the scope of this application.

Clearly, persons skilled in the art can make various modifications and variations to embodiments of this application without departing from the spirit and scope of embodiments of this application. In this way, this application is intended to cover these modifications and variations to embodiments of this application provided that they fall within the scope of protection defined by the following claims and their equivalent technologies of this application.

## Claims

1. A communication method, wherein the method is applied to a core network device, and comprises:
receiving first information from a requester, wherein the first information indicates a first terminal;
obtaining an operator identification code allocated by an operator device to the first terminal; and
sending second information to the first terminal, wherein the second information indicates the first terminal to store the operator identification code.

2. The method according to claim 1, wherein the operator identification code comprises a public land mobile network identifier PLMN ID.

3. The method according to claim 2, wherein the operator identification code further comprises one or more of the following: a first electronic product code EPC, an enterprise code allocated to the first terminal, and a unique identification code that is of the first terminal in the operator device and that is mapped from the first electronic product code EPC, wherein
the first EPC is allocated by the operator device, or the first EPC is from the requester.

4. The method according to any one of claims 1 to 3, wherein the second information further comprises first location information for storing the operator identification code.

5. The method according to any one of claims 1 to 4, wherein the second information further indicates the first terminal to store the first electronic product code EPC corresponding to the first terminal, wherein the first EPC is allocated by the operator device to the first terminal, or the first EPC is from the requester.

6. The method according to claim 5, wherein the second information further comprises second location information for storing the first EPC.

7. The method according to any one of claims 1 to 6, wherein after the receiving first information from a requester, the method further comprises:
obtaining a key corresponding to the first terminal, wherein
the second information further indicates the first terminal to store the corresponding first key.

8. The method according to claim 7, wherein the second information further comprises third location information for storing the first key.

9. The method according to any one of claims 1 to 8, wherein the first information comprises one or more of the following:
a tag identifier TID type of the first terminal, a default electronic product code EPC of the first terminal, and information about the requester, wherein the requester manages the first terminal.

10. The method according to any one of claims 1 to 9, wherein before the sending second information to the first terminal, the method further comprises:
sending third information to an access network device, wherein the third information indicates to search for the first terminal; and
receiving the default electronic product code EPC from the first terminal.

11. The method according to claim 10, wherein the third information comprises one or both of the following:
the tag identifier TID type of the first terminal, and the default electronic product code EPC of the first terminal.

12. The method according to any one of claims 1 to 11, wherein the method further comprises:
receiving fourth information from the requester, wherein the fourth information indicates the first terminal;
sending fifth information to the access network device, wherein the fifth information indicates to search for the first terminal;
receiving the first EPC allocated to the first terminal;
requesting, from the first terminal based on the first EPC, to obtain the operator identification code allocated to the first terminal;
receiving the operator identification code allocated to the first terminal; and
triggering authentication between the first terminal and the operator device based on the operator identification code.

13. The method according to any one of claims 1 to 11, wherein the method further comprises:
receiving fourth information from the requester, wherein the fourth information indicates the first terminal;
sending fifth information to the access network device, wherein the fifth information indicates to search for the first terminal and request to obtain the operator identification code allocated to the first terminal;
receiving the operator identification code allocated to the first terminal; and
triggering authentication between the first terminal and the operator device based on the operator identification code.

14. The method according to any one of claims 1 to 11, wherein the method further comprises:
receiving fourth information from the requester, wherein the fourth information indicates the first terminal;
sending fifth information to the access network device, wherein the fifth information indicates to search for the first terminal;
receiving the operator identification code allocated to the first terminal; and
triggering authentication between the first terminal and the operator device based on the operator identification code.

15. The method according to any one of claims 12 to 14, wherein the fourth information comprises the information about the requester, and the requester manages the first terminal; and before the sending fifth information to the access network device, the method further comprises:
determining, based on the information about the requester, the public land mobile network identifier PLMN ID allocated to the first terminal, wherein
the fifth information comprises the allocated PLMN ID.

16. The method according to claim 15, wherein before the sending fifth information to the access network device, the method further comprises:
determining, based on the information about the requester, an enterprise identifier allocated to the first terminal, wherein
the fifth information further comprises the allocated enterprise identifier.

17. The method according to claim 16, wherein the enterprise identifier is an enterprise code allocated to the first terminal; or
the enterprise identifier is a service identifier in a CompanyPrefix in an electronic product code EPC memory bank of the first terminal.

18. The method according to any one of claims 12 to 17, wherein the fourth information comprises one or more of the following: the first electronic product code EPC of the first terminal, the TID type of the first terminal, and the information about the requester, wherein the requester manages the first terminal; and
the fifth information comprises one or more of the following:
the first electronic product code EPC of the first terminal, the operator identification code associated with the first electronic product code EPC of the first terminal, and the TID type of the first terminal.

19. The method according to any one of claims 12 to 18, wherein before the triggering authentication between the first terminal and the operator device based on the operator identification code, the method further comprises:
determining, based on the operator identification code and subscription information of the first terminal, that an operator needs to perform authentication on the operator identification code.

20. A communication method, wherein the method is applied to a first terminal, and comprises:
receiving second information from a core network device, wherein the second information indicates the first terminal to store an operator identification code, and the operator identification code is allocated by an operator device to the first terminal; and
storing the operator identification code.

21. The method according to claim 20, wherein the second information further comprises first location information for storing the operator identification code; and
the storing the operator identification code comprises:
storing the operator identification code at a first storage location corresponding to the first location information.

22. The method according to claim 20 or 21, wherein the second information further indicates the first terminal to store a first electronic product code EPC corresponding to the first terminal, wherein the first EPC is allocated by the operator device, or the first EPC is from a requester; and
the method further comprises:
storing the first EPC.

23. The method according to claim 22, wherein the second information further comprises second location information for storing the first EPC; and
the storing the first EPC comprises:
storing the first EPC at a second storage location corresponding to the second location information.

24. The method according to any one of claims 20 to 23, wherein the second information further indicates the first terminal to store a first key corresponding to the first terminal; and
the method further comprises:
storing the first key.

25. The method according to claim 24, wherein the second information further comprises third location information for storing the first key; and
the storing the first key comprises:
storing the first key at a third storage location corresponding to the third location information.

26. The method according to any one of claims 20 to 25, wherein before the receiving second information from a second core network device, the method further comprises:
accessing an access network device; and
sending a default electronic product code EPC of the first terminal to the second core network device through the access network device.

27. A communication apparatus, comprising a functional module for implementing the method according to any one of claims 1 to 26.

28. A communication apparatus, comprising a processor, wherein the processor is coupled to a memory;
the memory is configured to store a computer program or instructions; and
the processor is configured to execute a part or all of the computer program or instructions in the memory; and when executing the part or all of the computer program or instructions, the processor is configured to implement the method according to any one of claims 1 to 26.

29. A communication apparatus, comprising a processor and a memory, wherein
the memory is configured to store a computer program or instructions; and
the processor is configured to execute a part or all of the computer program or instructions in the memory; and when executing the part or all of the computer program or instructions, the processor is configured to implement the method according to any one of claims 1 to 26.

30. A chip system, wherein the chip system comprises a processing circuit, and the processing circuit is coupled to a storage medium; and
the processing circuit is configured to execute a part or all of a computer program or instructions in the storage medium; and when executing the part or all of the computer program or instructions, the processing circuit is configured to implement the method according to any one of claims 1 to 26.

31. A computer-readable storage medium, configured to store a computer program, wherein the computer program comprises instructions for implementing the method according to any one of claims 1 to 26.

32. A computer program product, wherein the computer program product comprises computer program code; and when the computer program code is run on a computer, the computer is enabled to perform the method according to any one of claims 1 to 26.
